# EUROPEAN PATENT APPLICATION

(11) **EP 4 393 962 A1**
(43) Date of publication of application: **03.07.2024**
(21) Application number: 22874960.2
(22) Date of filing: 28.09.2022
(51) Int. Cl.: C08F 4/659, C08F 4/68, C08F 4/642, C08F 4/60, C08F 10/02

(54) **CATALYST COMPOSITION AND APPLICATION THEREOF**

(30) Priority: 30.09.2021 CN 202111158858; 30.09.2021 CN 202111158844; 30.09.2021 CN 202111156979
(71) Applicant: China Petroleum & Chemical Corporation, Beijing 100728 (CN); Sinopec (Beijing) Research Institute of Chemical Industry Co., Ltd., Beijing 100013 (CN)
(72) Inventor: WANG, Wei, Beijing 100013 (CN); WU, Changjiang, Beijing 100013 (CN); GUO, Tianhao, Beijing 100013 (CN); QU, Shuzhang, Beijing 100013 (CN); LI, Juan, Beijing 100013 (CN); ZHANG, Taoyi, Beijing 100013 (CN); HOU, Liping, Beijing 100013 (CN); SHENG, Jianfang, Beijing 100013 (CN); LIU, Na, Beijing 100013 (CN); ZHENG, Gang, Beijing 100013 (CN); ZHANG, Longgui, Beijing 100013 (CN)
(74) Representative: Hoffmann Eitle
(86) International application number: PCT/CN2022/122005
(87) International publication number: WO 2023/051575

(57) **Abstract**

The present invention relates to the field of olefin polymerization, and in particular relates to a catalyst composition and an application thereof. The catalyst composition of the present invention comprises the following components: a) a metallocene compound, b) a co-catalyst component, and c) a phenol, the co-catalyst component being a combination of an organoaluminum compound and an alkyl aluminoxane, or a combination of an organoaluminum compound and an organoboron compound. When the catalyst composition of the present invention is used for the copolymerization of ethylene and a cycloolefin or an alkenol, not only can the molecular weight of the polymer be increased, but the content of cycloolefin or alkenol structural unit in the copolymer can also be increased.

## Description

### CROSS REFERENCE TO RELATED APPLICATIONS

The present application claims the benefit of the Chinese patent application No. "202111158858.7", filed on September 30, 2021, entitled "CATALYST COMPOSITION, OLEFIN POLYMERIZATION METHOD AND APPLICATION", the content of which is entirely incorporated herein by reference;

The present application claims the benefit of the Chinese patent application No. "202111158844.5", filed on September 30, 2021, entitled "ETHYLENE-CYCLOOLEFIN COPOLYMER AND PREPARATION METHOD THEREOF", the content of which is entirely incorporated herein by reference;

The present application claims the benefit of the Chinese patent application No. "202111156979.8", filed on September 30, 2021, entitled "ETHYLENE-ENOL COPOLYMER AND PREPARATION METHOD THEREOF", the content of which is entirely incorporated herein by reference.

### FIELD

The present disclosure relates to the technical field of olefin polymerization, and in particular to a catalyst composition and a use thereof.

### BACKGROUND

Metallocene catalysts for olefin polymerization have been the research focus of the organometallic chemistry, catalysis chemistry, polymer chemistry and materials science in recent decades. Due to the use of this kind of catalyst, the olefin polymer with uniform molecular weight and chemical composition distributions can be obtained, both the molecular structure and molecular weight of the polymer can be highly controlled by adjusting the catalyst structure. The strong copolymerization capability of metallocenes is reflected in two aspects: on the one hand, the copolymer prepared with the metallocene catalyst has a higher comonomer content than other catalysts under the same polymerization conditions, which presents a high efficiency for copolymerizations; on the other hand, some monomers that cannot be catalytically polymerized by other catalysts can also be used as comonomers in the metallocene catalyst system, which presents the broad spectrum for copolymerization (ChemistrySelect, 2020, 5, 7581-7585). Because of the high efficiency and broad spectrum of the metallocene catalyst, it can catalyze to obtain a wide range of novel copolymers which have new compositions and structures compared to the copolymers prepared with other catalysts, and may exhibit novel properties, thereby allowing the applications of polyolefin materials in new fields.

For example, the copolymer of ethylene and norbornene is exactly one of the specific polymerization products of the single-site catalysts. When the content of norbornene is high, the polymer has a high glass transition temperature, thereby exhibiting desirable heat resistance, transparency, barrier properties, and a range of properties that are significantly better than those of conventional polyolefin materials. If the polymer has a high content of norbornene, it requires a large feed quantity of norbornene in the catalytic system during the synthesis of a polymer. However, a large amount of norbornene feeding will exacerbate the chain transfer reaction of the polymerization, and cause a decreased molecular weight of the polymer, and because the norbornene has a bulky size, a large steric hindrance of the norbornene gives rise to difficulty in the coordination and insertion, thereby decreasing the activity. For another example, during the copolymerization of ethylene and monomers containing active hydrogen (e.g.,enol), since the active hydrogen and its attached electron-rich atoms (e.g., oxygen atoms in enol) impose a toxic effect on the active center, the specific materials (e.g., aluminum alkyl) are required to remove the active hydrogen while shielding the lone pair electrons on the electron-rich atoms, but the substances (e.g., aluminum alkyl) generally have strong chain transfer reaction capability, thus this kind of polymerization generally has low activity, its polymer typically has a low molecular weight. Therefore, as regards increasing polymer molecular weight and even enhancing polymer activity while obtaining ethylene copolymer with increased copolymerization monomers, it is particularly important for improving the economical performance and practicality of producing this kind of polymer.

### SUMMARY

The first purpose of the present disclosure is to provide a catalyst composition that, when used in ethylene copolymerization, can not only increase the molecular weight of the polymer, improve the incorporation of comonomers, but also provide the polymer with a high polymerization activity.

The present disclosure have discovered through the in-depth study that by using a metallocene compound, a specific cocatalyst component (a combination of an aluminum alkyl and an alkyl aluminoxane or a combination of an aluminum alkyl and an organoboron compound) and a specific phenol, it not only can increase the molecular weight of the polymer and the incorporation of comonomers, but also provide the polymer with a high polymerization activity, thereby accomplishing the invention.

That is, the first aspect of the present disclosure provides a catalyst composition comprising the following components:
a) a metallocene compound with a structure represented by formula (I) and/or formula (II), [0011] 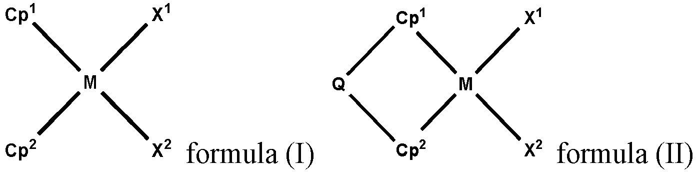
   in formulae (I) and (II),
   Cp¹ and Cp² are each independently C₁-C₂₀ hydrocarbyl mono-substituted or poly-substituted cyclopentadienyl or unsubstituted cyclopentadienyl, C₁-C₂₀ hydrocarbyl mono-substituted or poly-substituted indenyl or unsubstituted indenyl, C₁-C₂₀ hydrocarbyl mono-substituted or poly-substituted fluorenyl or unsubstituted fluorenyl;
   M is titanium, zirconium or hafnium;
   X¹ and X² are independently halogen atoms, alkoxy, aryloxy or hydrocarbyl, respectively;
   Q in formula (II) is an atom or a group that connects Cp¹ and Cp²,
b) a co-catalyst component,
c) a phenol with a structure represented by formula (III), 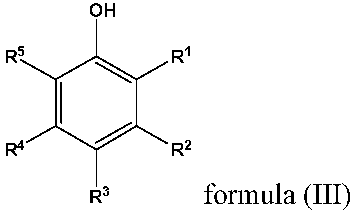 each of R¹, R², R³, R⁴ and R⁵ in formula (III) is independently a hydrogen atom, a halogen atom, or a hydrocarbyl having 1-30 carbon atoms; when each of R¹, R², R³, R⁴ and R⁵ is independently a hydrocarbyl having 1-30 carbon atoms, any two groups thereof may be closed into a ring.

A second aspect of the present disclosure provides a method of preparing an ethylene-cycloolefin copolymer, due to the method of preparing an ethylene-cycloolefin copolymer in the present disclosure, both the molecular weight of a polymer and the content of cycloolefin in the copolymer can be increased, thereby raising the glass transition temperature of the polymer.

A second aspect of the present disclosure provides a method of preparing an ethylene-cycloolefin copolymer comprising: subjecting ethylene and cycloolefin to a copolymerization reaction using a catalyst composition, the catalyst composition comprises the following components:
a) a metallocene compound with a structure represented by formula (I) and/or formula (II), 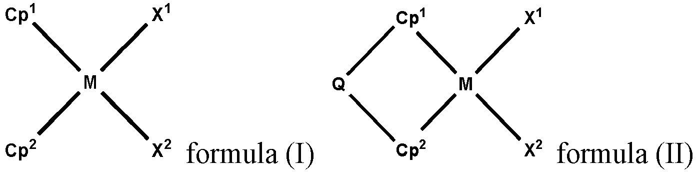
   in formulae (I) and (II),
   Cp¹ and Cp² are each independently C₁-C₂₀ hydrocarbyl mono-substituted or poly-substituted cyclopentadienyl or unsubstituted cyclopentadienyl, C₁-C₂₀ hydrocarbyl mono-substituted or poly-substituted indenyl or unsubstituted indenyl, C₁-C₂₀ hydrocarbyl mono-substituted or poly-substituted fluorenyl or unsubstituted fluorenyl;
   M is titanium, zirconium or hafnium;
   X¹ and X² are independently halogen atoms, alkoxy, aryloxy, or hydrocarbyl, respectively,
   Q in formula (II) is an atom or a group that connects Cp¹ and Cp²,
b) a co-catalyst component,
c) a phenol with a structure represented by formula (III), 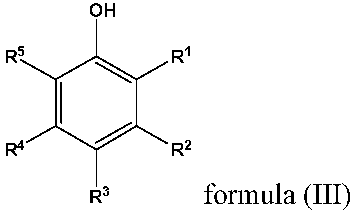 each of R¹, R², R³, R⁴ and R⁵ in formula (III) is independently a hydrogen atom, a halogen atom, or a hydrocarbyl having 1-30 carbon atoms, and when each of R¹, R², R³, R⁴ and R⁵ is independently a hydrocarbyl having 1-30 carbon atoms, any two groups thereof may be closed into a ring.

According to a third aspect of the present disclosure, it provides a method of preparing an ethylene-enol copolymer, the method of preparing ethylene-enol copolymer of the present disclosure not only can improve the molecular weight of the polymer, but also increase the content of the enol structural unit in the copolymer.

A third aspect of the present disclosure provides a method of preparing an ethylene-enol copolymer comprising: subjecting ethylene and enol to a copolymerization reaction using a catalyst composition, the catalyst composition comprises the following components:
a) a metallocene compound with a structure represented by formula (I) and/or formula (II), 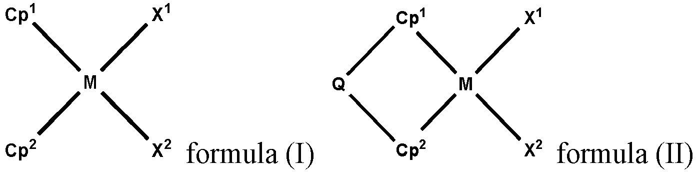
   in formulae (I) and (II),
   Cp¹ and Cp² are each independently C₁-C₂₀ hydrocarbyl mono-substituted or poly-substituted cyclopentadienyl or unsubstituted cyclopentadienyl, C₁-C₂₀ hydrocarbyl mono-substituted or poly-substituted indenyl or unsubstituted indenyl, C₁-C₂₀ hydrocarbyl mono-substituted or poly-substituted fluorenyl or unsubstituted fluorenyl;
   M is titanium, zirconium or hafnium,
   X¹ and X² are independently halogen atoms, alkoxy, aryloxy, or hydrocarbyl, respectively;
   Q in formula (II) is an atom or a group that connects Cp¹ and Cp²,
b) a co-catalyst component,
c) a phenol with a structure represented by formula (III), 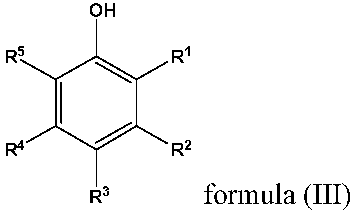 each of R¹, R², R³, R⁴ and R⁵ in formula (III) is independently a hydrogen atom, a halogen atom, or a hydrocarbyl having 1-30 carbon atoms, and when each of R¹, R², R³, R⁴ and R⁵ is independently a hydrocarbyl having 1-30 carbon atoms, any two groups thereof may be closed into a ring.

According to the present disclosure, when the catalyst composition is used for the copolymerization of ethylene and cycloolefin, both the content of cycloolefin in the copolymer and the molecular weight are increased, thereby raising the glass transition temperature of the polymer. In addition, when the catalyst composition of the present disclosure is used for the copolymerization of ethylene and cycloolefin, the catalytic activity of the catalyst can also be improved by using a combination of an organoaluminum compound and an organoboron compound with the phenol of the present disclosure.

Similarly, when the catalyst composition of the present disclosure is applied in the copolymerization of ethylene and enol, both the content of the enol structural unit in the copolymer and the molecular weight can be increased. Moreover, while using the catalyst composition of the present disclosure for the copolymerization of ethylene and enol, the catalytic activity of the catalyst can be improved by using a combination of an organoaluminum compound and an alkyl aluminoxane with the phenol of the present disclosure.

### DETAILED DESCRIPTION

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with each other to produce one or more new numerical ranges, which should be deemed have been specifically disclosed herein.

The first aspect of the present disclosure provides a catalyst composition comprising the following components:
a) a metallocene compound with a structure represented by formula (I) and/or formula (II), 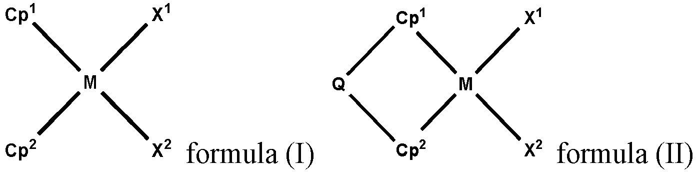
   in formulae (I) and (II),
   Cp¹ and Cp² are each independently C₁-C₂₀ hydrocarbyl mono-substituted or poly-substituted cyclopentadienyl or unsubstituted cyclopentadienyl, C₁-C₂₀ hydrocarbyl mono-substituted or poly-substituted indenyl or unsubstituted indenyl, C₁-C₂₀ hydrocarbyl mono-substituted or poly-substituted fluorenyl or unsubstituted fluorenyl;
   M is titanium, zirconium or hafnium;
   X¹ and X² are independently halogen atoms, alkoxy, aryloxy, or hydrocarbyl, respectively;
   Q in formula (II) is an atom or a group that connects Cp¹ and Cp²,
b) a co-catalyst component,
c) a phenol with a structure represented by formula (III), 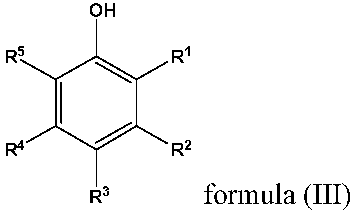 each of R¹, R², R³, R⁴ and R⁵ in formula (III) is independently a hydrogen atom, a halogen atom, or a hydrocarbyl having 1-30 carbon atoms; when each of R¹, R², R³, R⁴ and R⁵ is independently a hydrocarbyl having 1-30 carbon atoms, any two groups thereof may be closed into a ring.

The catalyst component according to the present disclosure does not comprise a carrier, it is a non-carrier type catalyst composition.

The catalyst component according to the present disclosure, it is preferable that Cp¹ and Cp² in formulae (I) and (II) are each independently C₁-C₁₆ hydrocarbyl mono-substituted or poly-substituted cyclopentadienyl or unsubstituted cyclopentadienyl, C₁-C₁₆ hydrocarbyl mono-substituted or poly-substituted indenyl or unsubstituted indenyl, C₁-C₁₆ hydrocarbyl mono-substituted or poly-substituted fluorenyl or unsubstituted fluorenyl; M is titanium or zirconium; X¹ and X² are independently halogen atoms.

The above-mentioned hydrocarbyl is more preferably the alkyl having 1-10 carbon atoms or the aryl having 6-12 carbon atoms, and it is further preferably the alkyl having 1-6 carbon atoms.

The above-mentioned alkyl having 1-10 carbon atoms refers to that the alkyl contains a total of 1-10 carbon atoms, and includes straight chain alkyl, branched chain alkyl or cycloalkyl, for example, it may be the straight chain alkyl, branched chain alkyl or cycloalkyl having a total of 1,2, 3, 4, 5, 6, 7, 8, 9 or 10 carbon atoms, the examples may be methyl, ethyl, propyl, isopropyl, butyl, tert-butyl, sec-butyl, isobutyl, pentyl, 1,1-dimethylpropyl, 1,2-dimethylpropyl, neopentyl, 1-methylbutyl, 2-methylbutyl, isopentyl, hexyl, or the like.

The examples of the above-mentioned aryl having 6-12 carbon atoms may be phenyl, benzyl, phenethyl, diphenylmethylene, diphenylethylene, etc.

In the compounds represented by formula (I) and formula (II) of the present disclosure, X¹ and X² are independently a halogen atom, alkoxy, aryloxy or hydrocarbyl.

For example, the above-mentioned halogen atom may be fluorine, chlorine, bromine or iodine, preferably fluorine, chlorine or bromine, more preferably chlorine or bromine, and especially preferably chlorine.

The examples of the above-mentioned alkoxy may be alkoxy having 1-8 carbon atoms, more preferably, alkoxy having 1-6 carbon atoms, and further preferably, alkoxy has 1-3 carbon atoms.

The examples of the alkoxy having 1-8 carbon numbers may be methoxyl, ethoxyl, propoxyl, isopropoxyl, butoxyl, tert-butoxyl, sec-butoxyl, iso-butoxyl, pentoxy, hexoxy, heptyloxy, octyloxy, etc.

The above-mentioned aryloxy, for example, may be the aryloxy having 6-12 carbon atoms, the specific examples may be phenoxyl, methylphenoxy, ethylphenoxy, naphthyloxy and the like.

The above-mentioned hydrocarbyl is preferably a hydrocarbyl (preferably alkyl) having 1-20 carbon atoms, more preferably a hydrocarbyl (preferably alkyl) having 1-12 carbon atoms, and further preferably a hydrocarbyl (preferably alkyl) having 1-6 carbon atoms. The specific examples may be methyl, ethyl, propyl, isopropyl, butyl, tert-butyl, sec-butyl, isobutyl, pentyl, 1,1-dimethylpropyl, 1,2-dimethylpropyl, neopentyl, 1-methylbutyl, 2-methylbutyl, isopentyl, hexyl, phenyl, benzyl and phenylethyl, etc.

In a preferred embodiment of the present disclosure, Q in formula (II) is -(CH₂)ₙ- (n is an integer of 2-20), both Cp¹ and Cp² are indenyl, M is zirconium, X¹ and X² are chlorine atoms.

In another preferred embodiment of the present disclosure, Q in formula (II) is -CH₂CH₂-, both Cp¹ and Cp² are indenyl, M is zirconium, X¹ and X² are chlorine atoms.

In another preferred embodiment of the present disclosure, Q in formula (II) is -SiR⁶R⁷-, both Cp¹ and Cp² are indenyl, M is zirconium, X¹ and X² are chlorine atoms, R⁶ and R⁷ are each independently a hydrogen atom or a C₁-C₂₀ hydrocarbyl.

In another preferred embodiment of the present disclosure, Q in formula (II) is -SiR⁸R⁹-, Cp¹ and Cp² are both 2-methyl-4-phenyl-indenyl, M is zirconium, X¹ and X² are chlorine atoms, R⁸ and R⁹ are each independently a hydrogen atom or a C₁-C₂₀ hydrocarbyl.

In another preferred embodiment of the present disclosure, Q in formula (II) is -CR¹⁰R¹¹-, Cp¹ is cyclopentadienyl, Cp² is fluorenyl, M is zirconium, X¹ and X² are chlorine atoms, R¹⁰ and R¹¹ are methyl or phenyl.

In another preferred embodiment of the present disclosure, Q in formula (II) is -CR¹²R¹³-, Cp¹ is cyclopentadienyl, Cp² is 2,7-di-t-butyl-fluorenyl, M is zirconium, X¹ and X² are chlorine atoms, R¹² and R¹³ are methyl or phenyl.

The above-mentioned hydrocarbyl having 1-20 carbon atoms is preferably the alkyl having 1-10 carbon atoms or the aryl having 6-12 carbon atoms, further preferably the alkyl having 1-6 carbon atoms.

The specific examples of the metallocene compound may be one or more selected from the group consisting of biscyclopentadienyl zirconium dichloride, bis(n-butylcyclopentadienyl) zirconium dichloride, bis(1-methyl-3-n-butylcyclopentadienyl) zirconium dichloride, bisindenyl zirconium dichloride, diphenylmethylene (cyclopentadienyl) (fluorenyl) zirconium dichloride, diphenylmethylene (cyclopentadienyl) (2,7-di-tert-butyl-9-fluorenyl) zirconium dichloride, isopropyl (cyclopentadienyl) (fluorenyl) zirconium dichloride, (4,4'-tert-butyl-diphenylmethylene)-cyclopentadienyl-(1-indenyl) -titanium dichloride, (4,4'-tert-butyl-diphenylmethylene)-cyclopentadienyl-(1-indenyl) - zirconium dichloride, (4,4'-tert-butyl-diphenylmethylene)-cyclopentadienyl-(1-indenyl) -hafnium dichloride, (4,4'-methoxy-diphenylmethylene)-cyclopentadienyl-(1-indenyl) zirconium dichloride, (4,4'-methoxy-diphenylmethylene)-cyclopentadienyl-(1-indenyl)-hafnium dichloride, (4,4'-methyl-diphenylmethylene) -cyclopentadienyl-(1-indenyl) zirconium dichloride, (4-methyl-4'-tert-butyl-diphenylmethylene)-cyclopentadienyl-(1-indenyl) zirconium dichloride, (3,3'-trifluoromethyl-diphenylmethylene)-cyclopentadienyl-(1-indenyl) -titanium dichloride, (3,3'-trifluoromethyl-diphenylmethylene)-cyclopentadienyl-(1-indenyl) zirconium dichloride, (3,3'-trifluoromethyl-diphenylmethylene)-cyclopentadienyl-(1-indenyl) -hafnium dichloride, (4,4'-fluoro-diphenylmethylene)-cyclopentadienyl-(1-indenyl)-titanium dichloride, (4,4'-fluoro-diphenylmethylene)-cyclopentadienyl-(1-indenyl) zirconium dichloride, (4,4'-fluoro-diphenylmethylene)-cyclopentadienyl-(1-indenyl)-hafnium dichloride, (4,4'-chloro-diphenylmethylene)-cyclopentadienyl-(1-indenyl) -titanium dichloride, (4,4'-chloro-diphenylmethylene)-cyclopentadienyl-(1-indenyl) zirconium dichloride, or (4,4'-chloro-diphenylmethylene)-cyclopentadienyl-(1-indenyl)-hafnium dichloride, rac-1,2-ethylenebis(indenyl)zirconium dichloride, rac-dimethylsilyl bisindenyl zirconium dichloride, rac-dimethylsilyl-bis(2-methyl-indenyl) zirconium dichloride and rac-dimethylsilyl-bis(2-methyl-4-phenylindenyl) zirconium dichloride. Among them, the metallocene compound is preferably one or more selected from the group consisting of biscyclopentadienyl zirconium dichloride, bis(n-butylcyclopentadienyl) zirconium dichloride, bis(1-methyl-3-n-butylcyclopentadienyl) zirconium dichloride, bisindenyl zirconium dichloride, diphenylmethylene (cyclopentadienyl) (fluorenyl) zirconium dichloride, diphenylmethylene (cyclopentadienyl) (2,7-di-tert-butyl-9-fluorenyl) zirconium dichloride, isopropyl (cyclopentadienyl) (fluorenyl) zirconium dichloride, rac-1,2-ethylenebis(indenyl)zirconium dichloride, rac-dimethylsilyl bisindenyl zirconium dichloride and rac-dimethylsilyl-bis(2-methyl-4-phenylindenyl) zirconium dichloride.

The catalyst composition according to the present disclosure, the alkyl aluminoxane is preferably a compound with a structure shown in formula (IV) and/or formula (V): 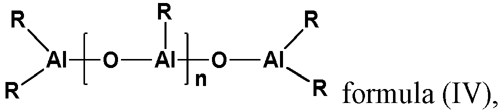 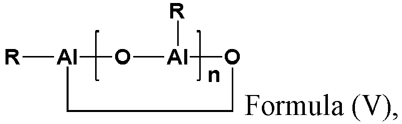 in formula (IV) and formula (V), R is selected from C₁-C₁₅ alkyl, and n represents an integer of 4-30; more preferably, R is selected from C₁-C₅ alkyl, and n represents an integer of 10-30.

The specific examples of the above-mentioned alkyl may be methyl, ethyl, propyl, isopropyl, butyl, t-butyl, sec-butyl, isobutyl, pentyl, 1,1-dimethylpropyl, 1,2-dimethylpropyl, neopentyl, 1-methylbutyl, 2-methylbutyl, isopentyl, hexyl, heptyl, octyl, nonyl, decyl, undecyl, dodecyl, tridecyl, tetradecyl and pentadecyl.

The aforementioned number n, for example, may be 4, 5, 6, 7, 8, 9, 10, 11, 12, 13, 14, 15, 16, 17, 18, 19, 20, 21, 22, 23, 24, 25, 26, 27, 28, 29, 30, etc.

The specific examples of alkyl aluminoxane may be methyl aluminoxane, ethyl aluminoxane, propyl aluminoxane and the like, and preferably methyl aluminoxane.

The catalyst composition according to the present disclosure, the organoboron compound may be various organoboron compounds used as the co-catalyst in the art, for example, one or more selected from the group consisting of tetra (pentafluorophenyl) borate triphenyl methyl ester, N,N-dimethylaniline tetra (pentafluorobenzene) borate and tri (pentafluorobenzene) boron.

The catalyst composition according to of the present disclosure, the organoaluminum compound is an alkyl aluminum represented by the general formula AlR₁R₂R₃, wherein R₁, R₂ and R₃ are each independently alkyl having 2-8 carbon atoms, R₁, R₂ and R₃ are the same or different.

The above-mentioned alkyl having 2-8 carbon atoms, for example, may be ethyl, propyl, isopropyl, butyl, t-butyl, sec-butyl, isobutyl, pentyl, 1,1-dimethylpropyl, 1,2-dimethylpropyl, neopentyl, 1-methylbutyl, 2-methylbutyl, isopentyl, hexyl, heptyl and octyl, etc.

The specific examples of the organoaluminum compound may be one or more selected from the group consisting of tri-ethyl aluminum, tri-isopropyl aluminum, tripropyl aluminum, tributyl aluminum, tri-isobutyl aluminum, tri-sec-butyl aluminum, tricyclic pentyl aluminum, tri-n-pentyl aluminum, triisopentyl aluminum, trihexyl aluminum, tri-octyl aluminum, ethyldimethyl aluminum and methyldiethyl aluminum; preferably one or more selected from the group consisting of tri-isobutyl aluminum, tri-n-hexyl aluminum and tri-n-octyl aluminum; more preferably, tri-isobutyl aluminum.

In the present disclosure, when the catalyst composition is used for the copolymerization of ethylene and cycloolefin, the catalytic activity of the catalyst can be enhanced by using a combination of organoboron compound and organoaluminum compound with the phenol of the present disclosure. In addition, when the catalyst composition of the present disclosure is used for the copolymerization of ethylene and enol, the catalytic activity of the catalyst may be enhanced by means of a combination of alkyl aluminoxane and organoaluminum compound with the phenol of the present disclosure. Therefore, it is particularly preferable in the present disclosure that the co-catalyst component is a combination of an organoaluminum compound and an alkyl aluminoxane or a combination of an organoaluminum compound and an organoboron compound, the organoaluminum compound is an aluminum alkyl represented by the general formula AlR₁R₂R₃.

According to the catalyst composition of the present disclosure, preferably, R¹, R², R³, R⁴ and R⁵ in formula (III) are each independently a hydrogen atom, a halogen atom or an alkyl having 1-6 carbon atoms, an aralkyl having 7-10 carbon atoms; more preferably, R¹, R², R³, R⁴ and R⁵ in formula (III) are independently a hydrogen atom, a halogen atom or an alkyl having 1-4 carbon atoms, an aralkyl having 7-8 carbon atoms; further preferably, R¹, R², R³, R⁴ and R⁵ in formula (III) are independently a hydrogen atom, a halogen atom or an alkyl having 1-4 carbon atoms, an aralkyl having 7-8 carbon atoms, and at least one of R¹, R², R³, R⁴ and R⁵ is not a hydrogen atom or a halogen atom.

As the above-mentioned alkyl having 1-6 carbon atoms, for example, it may be methyl, ethyl, propyl, isopropyl, butyl, tert-butyl, sec-butyl, isobutyl, pentyl, 1,1-dimethylpropyl, 1,2-dimethylpropyl, neopentyl, 1-methylbutyl, 2-methylbutyl, isopentyl, hexyl.

For example, the above-mentioned aralkyl having 7-10 carbon atoms may be benzyl, phenethyl. Among them, benzyl is preferred.

The above-mentioned halogen atom, for example, may be fluorine, chlorine, bromine or iodine; preferably fluorine, chlorine or bromine, more preferably chlorine or bromine, and especially preferably chlorine.

In the present present disclosure, a specific example of the phenol may be one or more selected from the group consisting of 2,6-di-tert-butyl-4-methylphenol, 2,6-di-tert-butyl-phenol, 2,4,6-tri-tert-butyl-phenol, 2,4-di-tert-butyl-phenol, 4-chloro-2-benzyl-phenol, 4-chloro-2-isopropyl-5-methylphenol and 2,4-dichloro-1-naphthol.

When the co-catalyst is a combination of an organoaluminum compound and an alkyl aluminoxane, the molar ratio of the metallocene compound to the alkyl aluminoxane calculated in terms of aluminum is 1: (50-20,000), preferably 1: (200-10,000), more preferably 1: (500-3,000); the molar ratio of the metallocene compound to the organoaluminum compound is 1: (10-5,000), more preferably 1: (10-3,000), more preferably 1: (10-2,000), more preferably 1: (10-1,000), further preferably 1: (100-800), further preferably 1: (200-600), further preferably 1: (300-600).

When the co-catalyst is a combination of an organoboron compound and an organoaluminum compound, the molar ratio of the metallocene compound to the organoboron compound is 1: (1-5), preferably 1: (1-2); the molar ratio of the metallocene compound to the organoaluminum compound is 1: (10-1,000), preferably 1: (10-200).

According to the catalyst composition of the present disclosure, thet molar ratio of the metallocene compound to the phenol is preferably 1: (1-1,000), more preferably 1: (10-500), further preferably 1: (20-200), further preferably 1: (50-150), still further preferably 1: (100-150).

A second aspect of the present disclosure provides a method of preparing an ethylene-cycloolefin copolymer comprising: subjecting ethylene and cycloolefin to a copolymerization reaction using a catalyst composition,
wherein the catalyst composition comprises the following components:
a) a metallocene compound with a structure represented by formula (I) and/or formula (II), 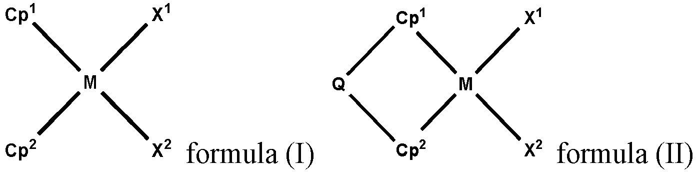
   in formulae (I) and (II),
   Cp¹ and Cp² are each independently C₁-C₂₀ hydrocarbyl mono-substituted or poly-substituted cyclopentadienyl or unsubstituted cyclopentadienyl, C₁-C₂₀ hydrocarbyl mono-substituted or poly-substituted indenyl or unsubstituted indenyl, C₁-C₂₀ hydrocarbyl mono-substituted or poly-substituted fluorenyl or unsubstituted fluorenyl;
   M is titanium, zirconium or hafnium;
   X¹ and X² are independently halogen atoms, alkoxy, aryloxy or hydrocarbyl, respectively,
   Q in formula (II) is an atom or a group that connects Cp¹ and Cp2,
b) a co-catalyst component,
c) a phenol with a structure represented by formula (III), 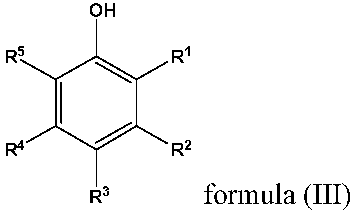 each of R¹, R², R³, R⁴ and R⁵ in formula (III) is independently a hydrogen atom, a halogen atom, or a hydrocarbyl having 1-30 carbon atoms, and when each of R¹, R², R³, R⁴ and R⁵ is independently a hydrocarbyl having 1-30 carbon atoms, any two groups thereof may be closed into a ring.

According to the method of preparing an ethylene-cycloolefin copolymer of the present disclosure, it is preferable that Cp¹ and Cp² in formulae (I) and (II) are each independently C₁-C₁₆ hydrocarbyl mono-substituted or poly-substituted cyclopentadienyl or unsubstituted cyclopentadienyl, C₁-C₁₆ hydrocarbyl mono-substituted or poly-substituted indenyl or unsubstituted indenyl, C₁-C₁₆ hydrocarbyl mono-substituted or poly-substituted fluorenyl or unsubstituted fluorenyl; M is titanium or zirconium; X¹ and X² are independently halogen atoms.

The above-mentioned hydrocarbyl is more preferably the alkyl having 1-10 carbon atoms or the aryl having 6-12 carbon atoms, and it is further preferably the alkyl having 1-6 carbon atoms.

The above-mentioned alkyl having 1-10 carbon atoms refers to that the alkyl contains a total of 1-10 carbon atoms, and includes straight chain alkyl, branched chain alkyl or cycloalkyl, for example, it may be the straight chain alkyl, the branched chain alkyl or cycloalkyl having a total of 1,2, 3, 4, 5, 6, 7, 8, 9 or 10 carbon atoms, the examples may be methyl, ethyl, propyl, isopropyl, butyl, tert-butyl, sec-butyl, isobutyl, pentyl, 1,1-dimethylpropyl, 1,2-dimethylpropyl, neopentyl, 1-methylbutyl, 2-methylbutyl, isopentyl, hexyl, or the like.

Examples of the above-mentioned aryl having 6-12 carbon atoms may be phenyl, benzyl, phenethyl, diphenylmethylene, diphenylethylene, etc.

In the compounds represented by formula (I) and formula (II) of the present disclosure, X¹ and X² are independently halogen atom, alkoxy, aryloxy or hydrocarbyl.

For example, the above-mentioned halogen atom may be fluorine, chlorine, bromine or iodine, preferably fluorine, chlorine or bromine, more preferably chlorine or bromine, and especially preferably chlorine.

Examples of the above-mentioned alkoxy may be alkoxy having 1-8 carbon atoms, more preferably, alkoxy having 1-6 carbon atoms, and further preferably, alkoxy has 1-3 carbon atoms.

The examples of the alkoxy having 1-8 carbon numbers may be methoxyl, ethoxyl, propoxyl, isopropoxyl, butoxyl, tert-butoxyl, sec-butoxyl, iso-butoxyl, pentoxy, hexoxy, heptyloxy, octyloxy, etc.

The above-mentioned aryloxy, for example, may be the aryloxy having 6-12 carbon atoms, the specific examples may be phenoxyl, methylphenoxy, ethylphenoxy, naphthyloxy and the like.

The above-mentioned hydrocarbyl is preferably a hydrocarbyl (preferably alkyl) having 1-20 carbon atoms (preferably alkyl), more preferably a hydrocarbyl (preferably alkyl) having 1-12 carbon atoms, and further preferably a hydrocarbyl (preferably alkyl) having 1-6 carbon atoms. The specific examples may be methyl, ethyl, propyl, isopropyl, butyl, tert-butyl, sec-butyl, isobutyl, pentyl, 1,1-dimethylpropyl, 1,2-dimethylpropyl, neopentyl, 1-methylbutyl, 2-methylbutyl, isopentyl, hexyl, phenyl, benzyl and phenylethyl, etc.

In a preferred embodiment of the present disclosure, Q in formula (II) is -(CH₂)ₙ- (n is an integer of 2-20), both Cp¹ and Cp² are indenyl, M is zirconium, X¹ and X² are chlorine atoms.

In another preferred embodiment of the present disclosure, Q in formula (II) is -CH₂CH₂-, both Cp¹ and Cp² are indenyl, M is zirconium, X¹ and X² are chlorine atoms.

In another preferred embodiment of the present disclosure, Q in formula (II) is -SiR⁶R⁷-, both Cp¹ and Cp² are indenyl, M is zirconium, X¹ and X² are chlorine atoms, R⁶ and R⁷ are each independently a hydrogen atom or a C₁-C₂₀ hydrocarbyl.

In another preferred embodiment of the present disclosure, Q in formula (II) is -SiR⁸R⁹-, Cp¹ and Cp² are both 2-methyl-4-phenyl-indenyl, M is zirconium, X¹ and X² are chlorine atoms, R⁸ and R⁹ are each independently a hydrogen atom or a C₁-C₂₀ hydrocarbyl.

In another preferred embodiment of the present disclosure, Q in formula (II) is -CR¹⁰R¹¹-, Cp¹ is cyclopentadienyl, Cp² is fluorenyl, M is zirconium, X¹ and X² are chlorine atoms, R¹⁰ and R¹¹ are methyl or phenyl.

In another preferred embodiment of the present disclosure, Q in formula (II) is -CR¹²R¹³-, Cp¹ is cyclopentadienyl, Cp² is 2,7-di-t-butyl-fluorenyl, M is zirconium, X¹ and X² are chlorine atoms, R¹² and R¹³ are methyl or phenyl.

The above-mentioned hydrocarbyl having 1-20 carbon atoms is preferably the alkyl having 1-10 carbon atoms or the aryl having 6-12 carbon atoms, further preferably the alkyl having 1-6 carbon atoms.

The specific examples of the metallocene compound may be one or more selected from the group consisting of biscyclopentadienyl zirconium dichloride, bis(n-butylcyclopentadienyl) zirconium dichloride, bis(1-methyl-3-n-butylcyclopentadienyl) zirconium dichloride, bisindenyl zirconium dichloride, diphenylmethylene (cyclopentadienyl) (fluorenyl) zirconium dichloride, diphenylmethylene (cyclopentadienyl) (2,7-di-tert-butyl-9-fluorenyl) zirconium dichloride, isopropyl (cyclopentadienyl) (fluorenyl) zirconium dichloride, (4,4'-tert-butyl-diphenylmethylene)-cyclopentadienyl-(1-indenyl) -titanium dichloride, (4,4'-tert-butyl-diphenylmethylene)-cyclopentadienyl-(1-indenyl) - zirconium dichloride, (4,4'-tert-butyl-diphenylmethylene)-cyclopentadienyl-(1-indenyl) -hafnium dichloride, (4,4'-methoxy-diphenylmethylene)-cyclopentadienyl-(1-indenyl) zirconium dichloride, (4,4'-methoxy-diphenylmethylene)-cyclopentadienyl-(1-indenyl)-hafnium dichloride, (4,4'-methyl-diphenylmethylene) -cyclopentadienyl-(1-indenyl) zirconium dichloride, (4-methyl-4'-tert-butyl-diphenylmethylene)-cyclopentadienyl-(1-indenyl) zirconium dichloride, (3,3'-trifluoromethyl-diphenylmethylene)-cyclopentadienyl-(1-indenyl) -titanium dichloride, (3,3'-trifluoromethyl-diphenylmethylene)-cyclopentadienyl-(1-indenyl) zirconium dichloride, (3,3'-trifluoromethyl-diphenylmethylene)-cyclopentadienyl-(1-indenyl) -hafnium dichloride, (4,4'-fluoro-diphenylmethylene)-cyclopentadienyl-(1-indenyl)-titanium dichloride, (4,4'-fluoro-diphenylmethylene)-cyclopentadienyl-(1-indenyl) zirconium dichloride, (4,4'-fluoro-diphenylmethylene)-cyclopentadienyl-(1-indenyl)-hafnium dichloride, (4,4'-chloro-diphenylmethylene)-cyclopentadienyl-(1-indenyl) -titanium dichloride, (4,4'-chloro-diphenylmethylene)-cyclopentadienyl-(1-indenyl) zirconium dichloride, or (4,4'-chloro-diphenylmethylene)-cyclopentadienyl-(1-indenyl)-hafnium dichloride, rac-1,2-ethylenebis(indenyl)zirconium dichloride, rac-dimethylsilyl bisindenyl zirconium dichloride, rac-dimethylsilyl-bis(2-methyl-indenyl) zirconium dichloride and rac-dimethylsilyl-bis(2-methyl-4-phenylindenyl) zirconium dichloride. Among them, the metallocene compound is preferably one or more selected from the group consisting of biscyclopentadienyl zirconium dichloride, bis(n-butylcyclopentadienyl) zirconium dichloride, bis(1-methyl-3-n-butylcyclopentadienyl) zirconium dichloride, bisindenyl zirconium dichloride, diphenylmethylene (cyclopentadienyl) (fluorenyl) zirconium dichloride, diphenylmethylene (cyclopentadienyl) (2,7-di-tert-butyl-9-fluorenyl) zirconium dichloride, isopropyl (cyclopentadienyl) (fluorenyl) zirconium dichloride, rac-1,2-ethylenebis(indenyl)zirconium dichloride, rac-dimethylsilyl bisindenyl zirconium dichloride and rac-dimethylsilyl-bis(2-methyl-4-phenylindenyl) zirconium dichloride.

The preparation method of the ethylene-cycloolefin copolymer according to the present disclosure, it is preferable that the co-polymer components comprise one or more selected from the group consisting of an alkyl aluminoxane, an organoboron compound and an organoaluminum compound. In particular, the co-catalyst component may be an alkyl aluminoxane, or a combination of an alkyl aluminoxane and an organoaluminum compound, or a combination of an organoaluminum compound and an organoboron compound.

Since the catalyst composition of the present disclosure is used for the copolymerization of ethylene and cycloolefin, the catalytic activity of the catalyst may also be enhanced by using a combination of organoboron compound and organoaluminum compound with the phenol of the present disclosure. Therefore, the co-catalyst component is preferably a combination of an organoaluminum compound and an organoboron compound.

The alkyl aluminoxane, the organoaluminum compound and the organoboron compound are defined as those recited in the first aspect of the present disclosure, the content will not be repeated herein.

In addition, the phenol with a structure shown by formula (III) is also described as that recited in the first aspect of the present disclosure, the content will not be further described herein.

The method of preparing an ethylene-cycloolefin copolymer according to the present disclosure, when the co-catalyst is a combination of an organoaluminum compound and an alkyl aluminoxane, the molar ratio of the metallocene compound to the alkyl aluminoxane calculated in terms of aluminum is 1: (50-20,000), preferably 1: (200-10,000), more preferably 1: (500-3,000).

The method of preparing an ethylene-cycloolefin copolymer according to the present disclosure, when the co-catalyst is a combination of an organoboron compound and an organoaluminum compound; the molar ratio of the metallocene compound to the organoboron compound is 1: (1-5), preferably 1: (1-2); the molar ratio of the metallocene compound to the organoaluminum compound is 1: (10-1,000), preferably 1: (10-200).

The method of preparing an ethylene-cycloolefin copolymer according to the present disclosure, in the case that the co-catalyst is a combination of an alkyl aluminoxane and an organoaluminum compound, the molar ratio of the metallocene compound to the alkyl aluminoxane calculated in terms of aluminum is 1: (50-20,000), preferably 1: (200-10,000), more preferably 1: (500-3,000); the molar ratio of the metallocene compound to the organoaluminum compound is 1: (10-5,000), more preferably 1: (10-3,000), more preferably 1: (10-2,000), more preferably 1: (10-1,000), further preferably 1: (100-800), further preferably 1: (200-600), further preferably 1: (300-600).

The method of preparing an ethylene-cycloolefin copolymer according to the present disclosure, the molar ratio of the metallocene compound to the phenol is preferably 1: (1-1,000), more preferably 1: (10-500), further preferably 1: (20-200), further preferably 1: (50-150), still further preferably 1: (100-150).

The method of preparing an ethylene-cycloolefin copolymer according to the present disclosure, the used amounts of ethylene and cycloolefin may be the conventional dosages in the art for the synthesis of ethylene-cycloolefin copolymer, for example, the concentration of cycloolefin in the polymerization system is within a range of 0.05-10 mol/L, preferably 0.1-5 mol/L.

The method of preparing an ethylene-cycloolefin copolymer according to the present disclosure, the used amount of metallocene compound in the polymerization system can be the amount commonly used in the art for the synthesis of ethylene-cycloolefin copolymer. The concentration of metallocene compound in the polymerization system is preferably within a range of 1×10⁻⁹ mol/L - 1×10⁻³ mol/L, more preferably within a range of 1×10⁻⁸ mol/L - 1×10⁻⁴ mol/L.

The method of preparing an ethylene-cycloolefin copolymer according to the present disclosure, the cycloolefin is preferably a cycloolefin having 5-20 carbon atoms; more preferably, the cycloolefin is one or more selected from the group consisting of cyclopentene, cycloheptene, cyclooctene, norbornene and tetracyclic [6.2.1.13,6.02,7] dodeca-4-alkene; further preferably, the cycloolefin is norbornene.

The method of preparing an ethylene-cycloolefin copolymer according to the present disclosure, the conditions of copolymerization reaction may be the conventional conditions in the art for the synthesis of ethylene-cycloolefin copolymer. Preferably, the polymerization reaction temperature is within a range of 0-200°C, and the polymerization reaction time is within a range of 1-300min; more preferably, the polymerization reaction temperature is within a range of 50-160°C, and the polymerization reaction time is within a range of 5-60min. In addition, the partial pressure of ethylene may be within a range of 0.1-10MPa, preferably within a range of 0.1-4.0MPa.

In a preferred embodiment of the present disclosure, when the co-catalyst component is an alkyl aluminoxane, the preparation method comprises the following steps: subjecting a fully dried polymerization apparatus to a vacuumizing process and rinsing with nitrogen gas, and repeating several times; adding the cycloolefin, followed by the vacuumizing process, filling the ethylene, subsequently adding a reaction solvent, a phenol and an alkyl aluminoxane, then raising the temperature to the polymerization reaction temperature, adding a metallocene compound sequentially to perform the polymerization reaction. After the polymerization reaction is complete, the feed of ethylene is shut off, adding an acidified ethanol into the reaction solution, stirring the solution and filtering the reaction product to prepare the polymer.

In another preferred embodiment of the present disclosure, the co-catalyst component is a combination of an organoboron compound and an organoaluminum compound, the preparation method comprises the following steps: subjecting a fully dried polymerization apparatus to a vacuumizing process, rinsing with nitrogen gas, and repeating for several times; adding the cycloolefin, followed by the vacuumizing process, filling the ethylene, subsequently adding a reaction solvent, a phenol and an organoaluminum compound, then raising the temperature to the polymerization reaction temperature, adding a metallocene compound and an organoboron compound sequentially to perform the polymerization reaction. After the polymerization reaction is complete, the feed of ethylene is shut off, adding an acidified ethanol into the reaction solution, stirring the solution and filtering the reaction product to prepare the polymer.

A third aspect of the present disclosure provides a method of preparing an ethylene-enol copolymer comprising: subjecting ethylene and enol to a copolymerization reaction using a catalyst composition,
wherein the catalyst composition comprises the following components:
a) a metallocene compound with a structure represented by formula (I) and/or formula (II), 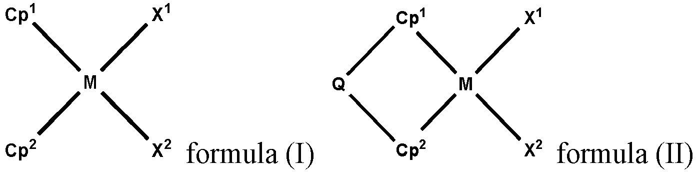
   in formulae (I) and (II),
   Cp¹ and Cp² are each independently C₁-C₂₀ hydrocarbyl mono-substituted or poly-substituted cyclopentadienyl or unsubstituted cyclopentadienyl, C₁-C₂₀ hydrocarbyl mono-substituted or poly-substituted indenyl or unsubstituted indenyl, C₁-C₂₀ hydrocarbyl mono-substituted or poly-substituted fluorenyl or unsubstituted fluorenyl;
   M is titanium, zirconium, or hafnium;
   X¹ and X² are independently halogen atoms, alkoxy, aryloxy or hydrocarbyl, respectively;
   Q in formula (II) is an atom or a group that connects Cp¹ and Cp2,
b) a co-catalyst component,
c) a phenol with a structure represented by formula (III), 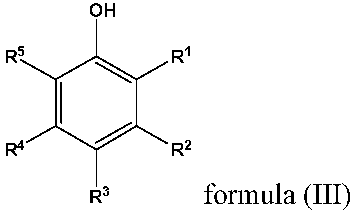 each of R¹, R², R³, R⁴ and R⁵ in formula (III) is independently a hydrogen atom, a halogen atom, or a hydrocarbyl having 1-30 carbon atoms, and when each of R¹, R², R³, R⁴ and R⁵ is independently a hydrocarbyl having 1-30 carbon atoms, any two groups thereof may be closed into a ring.

The method of preparing ethylene-alkenol copolymer according to the present disclosure, the formulae (I) and (II) are as described in the first aspect of the present disclosure, and will not be repeatedly described herein.

The method of preparing ethylene-enol copolymer according to the present disclosure, it is preferable that the co-catalyst component comprises one or more selected from the group consisting of an alkyl aluminoxane, an organoboron compound and an organoaluminum compound. Specifically, the co-catalyst component may be an alkyl aluminoxane, or a combination of an alkyl aluminoxane and an organoaluminum compound, or a combination of an organoaluminum compound and an organoboron compound.

When the catalyst composition of the present disclosure is used for the copolymerization of ethylene and enol, the catalytic activity of the catalyst can also be enhanced by using a combination of alkyl aluminoxane and organoaluminum compound with the phenol of the present disclosure. Therefore, the co-catalyst component is preferably a combination of an organoaluminum compound and an alkyl aluminoxane.

The aforementioned alkyl aluminoxane, the organoaluminum compound and the organoboron compound are as described in the first aspect of the invention, the content will not be repeatedly described herein.

Further, the phenol with a structure shown by formula (III) is also as described in the first aspect of the present disclosure, the content will not be repeatedly described herein.

In accordance with the method of preparing the ethylene-enol copolymer in the present disclosure, when the co-catalyst is an alkyl aluminoxane, the molar ratio of the metallocene compound to the alkyl aluminoxane calculated in terms of aluminum is 1: (50-20,000), more preferably 1: (200-10,000), further preferably 1: (500-3,000).

When the co-catalyst is a combination of an alkyl aluminoxane and an organoaluminum compound, the molar ratio of the metallocene compound to the alkyl aluminoxane calculated in terms of aluminum is 1: (50-20,000), more preferably 1: (200-10,000), further preferably 1: (500-3,000); the molar ratio of the metallocene compound to the organoaluminum compound is 1: (10-5,000), more preferably 1: (10-3,000), more preferably 1: (10-2,000), more preferably 1: (10-1,000), further preferably 1: (100-800), further preferably 1: (200-600), further preferably 1: (300-600).

When the co-catalyst is a combination of an organoboron compound and an organoaluminum compound, the molar ratio of the metallocene compound to the organoboron compound is 1: (1-5), preferably 1: (1-2); the molar ratio of the metallocene compound to the organoaluminum compound is 1: (10-1,000), preferably 1: (10-200).

The method of preparing an ethylene-alkenol copolymer according to the present disclosure, the molar ratio of the metallocene compound to the phenol is preferably 1: (1-1,000), more preferably 1: (10-500), even more preferably 1: (20-200), further preferably 1: (50-150), still further preferably 1: (100-150).

The method of preparing an ethylene-enol copolymer according to the present disclosure, the used amounts of ethylene and the enol may be the conventional dosages in the art for the synthesis of ethylene-enol copolymer, for example, the concentration of enol in the polymerization reaction system may be within a range of 0.01-1mol/L, preferably within a range of 0.1-1mol/L.

The method of preparing an ethylene-enol copolymer according to the present disclosure, the organoaluminum compound is preferably an alkylaluminum represented by general formula AlR₁R₂R₃, wherein R₁, R₂ and R₃ are each independently alkyl having 2-8 carbon atoms, R₁, R₂ and R₃ are the same or different.

The above-mentioned alkyl having 2-8 carbon atoms, for example, may be ethyl, propyl, isopropyl, butyl, t-butyl, sec-butyl, isobutyl, pentyl, 1,1-dimethylpropyl, 1,2-dimethylpropyl, neopentyl, 1-methylbutyl, 2-methylbutyl, isopentyl, hexyl, heptyl and octyl, etc.

The specific examples of the above-mentioned aluminum alkyl may be one or more selected from the group consisting of tri-ethyl aluminum, tri-isopropyl aluminum, tripropyl aluminum, tributyl aluminum, tri-isobutyl aluminum, tri-sec-butyl aluminum, tricyclic pentyl aluminum, tri-n-penty aluminum, triisopentyl aluminum, trihexyl aluminum, tri-octyl aluminum, ethyldimethyl aluminum and methyldiethyl aluminum. Among them, the aluminum alkyl is preferably one or more selected from the group consisting of tri-isobutyl aluminum, tri-n-hexyl aluminum and tri-n-octyl aluminum.

In addition, the molar ratio of the organoaluminum compound to the enol is preferably 1: (1-3), more preferably 1: (1-1.5).

Furthermore, the organoaluminum compound is preferably added simultaneously with the enol, or the organoaluminum compound is subsequently added after the enol is added.

The method of preparing an ethylene-enol copolymer according to the present disclosure, the used amount of the metallocene compound in the polymerization system can be the conventional dosage in the art for the synthesis of an ethylene-enol copolymer. The concentration of metallocene compound in the polymerization system is preferably within a range of 1×10⁻⁹ mol/L - 1×10⁻³ mol/L, more preferably within a range of 1×10⁻⁸ mol/L - 1×10⁻⁴ mol/L.

The method of preparing the ethylene-enol copolymer according to the present disclosure, it is preferable that the enol has a structure shown in formula (VI), 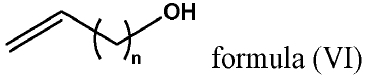 n in formula (VI) is an integer of 1-15, preferably an integer of 2-9.

As the enol has a structure shown in formula (VI), the specific examples may be the compounds represented by the formula when n is 1,2, 3, 4, 5, 6, 7, 8, 9, 10, 11, 12, 13, 14 and 15, respectively.

The method of preparing the ethylene-enol copolymer of the present disclosure, the conditions of copolymerization reaction may be the conventional conditions in the art for the synthesis of ethylene-enol copolymer. Preferably, the polymerization reaction temperature is within a range of 0-200°C, and the polymerization reaction time is within a range of 1-300min; more preferably, the polymerization reaction temperature is within a range of 50-160°C, and the polymerization reaction time is within a range of 5-60min. In addition, the partial pressure of ethylene may be within a range of 0.1-10MPa, preferably within a range of 0.1-4.0MPa.

According to the present disclosure, when the catalyst composition is used for the copolymerization of ethylene and cycloolefin, both the content of cycloolefin in the copolymer and the molecular weight are increased, thereby raising the glass transition temperature of the polymer. In addition, when the catalyst composition of the present present disclosure is used for the copolymerization of ethylene and cycloolefin, the catalytic activity of the catalyst can also be improved by using a combination of an organoaluminum compound and an organoboron compound with the phenol of the present disclosure.

Similarly, when the catalyst composition of the present disclosure is applied in the copolymerization of ethylene and enol, both the content of alkenol structural unit in the copolymer and the molecular weight can be increased. Moreover, while using the catalyst composition of the present disclosure for the copolymerization of ethylene and enol, the catalytic activity of the catalyst can be improved by using a combination of an organoaluminum compound and an alkyl aluminoxane with the phenol of the present disclosure.

The present disclosure will be described below in detail with reference to examples, but the present disclosure is not limited to the examples described below.

Unless otherwise specified, each of the raw materials used in the following Examples and Comparative Examples is disclosed by the prior art, for example, the material may be commercially available or produced according to the method disclosed by the prior art.

### Test method of polymer:

Weight average molecular weight and molecular weight distribution test
1) The molecular weight and molecular weight distribution of the samples were determined by using a PL-GPC 220 type GPC manufactured by Polymer Laboratories Ltd. in the United Kingdom. The chromatographic columns were 3 Plgel 10µm MIXED-B columns connected in series. Both the solvent and the mobile phases were 1,2,4-trichlorobenzene (containing 0.025wt% antioxidant 2,6-dibutyl-p-cresol), the column temperature was 150°C, the flow rate was 1.0mL/min, the sample concentration was 1mg/mL, an IR5 infrared concentration detector was furnished, and the universal calibration was performed using a narrow-distribution polystyrene standard samples.
2) Glass transition temperature

The glass transition temperature was measured by the TA 100 Differential Scanning Calorimeter (DSC), the scan temperature was within a range of 25-200°C, and the temperature ramp rate was 10°C/min. The thermal history was removed to obtain a secondary heating curve, and normalized integral processing was performed.

### 3) Copolymerization monomer content test

The content of comonomer in the samples was tested by using the AVANCE III 400MHz nuclear magnetic resonance spectrometer manufactured by the Bruker Incorporation. The solvent was deuterated ortho-dichlorobenzene, the 10 mm PASEX 13C-1H/D Z-GRD probe was used, the sample with a mass concentration of 10% was dissolved uniformly at 130°C, the test temperature was 125°C, the rotational speed was 20Hz, 90° pulses, the spectral width was 120ppm, a sampling time was 5 seconds, the latency time was 10 seconds, and the scanning was performed for 6,000 times. The comonomer content was calculated based on the ¹³C-NMR spectrum and using the method described in the literature, for instance, Macromolecules 2000,33,8931-8944 (for calculating the content of ethylene-norbomene copolymer), and Macromolecular Chemistry and Physics, 2013,214,2245-2249 (for calculating the content of ethylene-enol copolymer).

### 4) Thermal analysis testing

The TA 100 differential scanning calorimeter was used, the scanning temperature was within a range of 25-200°C, and the temperature ramp rate was 10°C/min. The thermal history was removed to obtain a secondary heating curve.

The phenols used in Comparative Examples and Examples were as follows:
Phenol 1: 2, 6-di-tert-butyl-4-methylphenol
Phenol 2: 2, 6-di-tert-butylphenol
Phenol 3: 2, 4-di-tert-butylphenol
Phenol 4: 4-chloro-2-benzyl phenol
Phenol 5: 4-chloro-2-isopropyl-5-methyl phenol
Phenol 6: 2, 4-dichloro-1-naphthol

The following examples served to illustrate the use of the catalyst composition of the present disclosure for the copolymerization of ethylene and cycloolefin.

### Comparative Example 1

The polymerization flask was fully dried, 4.71g of norbornene was added into the polymerization flask, which was vacuumized and washed with nitrogen gas for three times repeatedly. The polymerization flask was vacuumized, the solenoid valve was operated to fill ethylene at a pressure of 1atm, 26mL of toluene and 3mL of methylalumoxane toluene solution (containing 5.0mmol methylalumoxane) were added, the temperature was raised to 70°C, 1mL of catalyst solution (containing 5µmol of diphenylmethylene (cyclopentadienyl) (fluorenyl) zirconium dichloride) was added, the timing was started, the pressure of ethylene in the polymerization flask was decreased due to the ethylene consumption during the reaction process, the solenoid valve automatically opened to replenish ethylene in order to maintain the pressure at 1atm. After 20 minutes, the feed of ethylene was shut off, the reaction solution was poured into a beaker, an acidified ethanol was added, then stirred for more than 6 hours, the reaction product was filtered to prepare the polymer. The polymerization and characterization data was listed in Table 1.

### Comparative Example 2

The polymerization flask was fully dried, 4.71g of norbornene was added into the polymerization flask, which was vacuumized and washed with nitrogen gas for three times repeatedly. The polymerization flask was vacuumized, the solenoid valve was operated to fill ethylene at a pressure of 1atm, 27mL of toluene and 1mL of tri-isobutyl aluminum toluene solution (containing 1.0mmol tri-isobutyl aluminum) were added, the temperature was raised to 70°C, 1mL of catalyst solution (containing 5µmol of diphenylmethylene (cyclopentadienyl) (fluorenyl) zirconium dichloride) was added, 1mL of tetra (pentafluorophenyl) borate triphenyl methyl ester toluene solution (containing 6µmol of tetra (pentafluorophenyl) borate triphenyl methyl ester) was further added, the timing was started, the pressure of ethylene in the polymerization flask was decreased due to the ethylene consumption during the reaction process, the solenoid valve automatically opened to replenish ethylene in order to maintain the pressure at 1atm. After 20 minutes, the feed of ethylene was shut off, the reaction solution was poured into a beaker, an acidified ethanol was added, then stirred for more than 6 hours, the reaction product was filtered to prepare the polymer. The polymerization and characterization data was listed in Table 2.

### Examples 1-9

The polymerization flask was fully dried, 4.71g of norbornene was added into the polymerization flask, which was vacuumized and washed with nitrogen gas for three times repeatedly. The polymerization flask was vacuumized, the solenoid valve was operated to fill ethylene at a pressure of 1atm, 25mL of toluene, 1mL of phenol solution (the used amounts of phenol in each example were shown in Table 1) and 3mL of methylalumoxane toluene solution (containing 5.0mmol methylalumoxane) were added, the temperature was raised to 70°C, 1mL of catalyst solution (containing 5µmol of diphenylmethylene (cyclopentadienyl) (fluorenyl) zirconium dichloride) was added, the timing was started, the pressure of ethylene in the polymerization flask was decreased due to the ethylene consumption during the reaction process, the solenoid valve automatically opened to replenish ethylene in order to maintain the pressure at 1atm. After 20 minutes, the feed of ethylene was shut off, the reaction solution was poured into a beaker, an acidified ethanol was added, then stirred for more than 6 hours, and the reaction product was filtered to prepare the polymer. The molar ratio of phenol to catalyst (calculated in terms of metallocene), the polymerization and characterization data were listed in Table 1.

### Examples 10-14

The polymerization flask was fully dried, 4.71g of norbornene was added into the polymerization flask, which was vacuumized and washed with nitrogen gas for three times repeatedly. The polymerization flask was vacuumized, and the solenoid valve was operated to fill ethylene at a pressure of 1atm, 26mL of toluene, 1mL of phenol solution (the used amounts of phenol in each example were shown in Table 1), and 1mL of tri-isobutyl aluminum toluene solution (containing 1.0mmol tri-isobutyl aluminum) were added, the temperature was raised to 70°C, 1 mL of catalyst solution (containing 5µmol of diphenylmethylene (cyclopentadienyl) (fluorenyl) zirconium dichloride) was added, 1mL of tetra (pentafluorophenyl) borate triphenyl methyl ester toluene solution (containing 6µmol of tetra (pentafluorophenyl) borate triphenyl methyl ester) was further added, the timing was started, the pressure of ethylene in the polymerization flask was decreased due to the ethylene consumption during the reaction process, the solenoid valve automatically opened to replenish ethylene in order to maintain the pressure at 1atm. After 20 minutes, the feed of ethylene was shut off, the reaction solution was poured into a beaker, an acidified ethanol was added, then stirred for more than 6 hours, and the reaction product was filtered to prepare the polymer. The molar ratio of phenol to catalyst (calculated in terms of metallocene), the polymerization and characterization data were listed in Table 2.

The polymerization and characterization data were illustrated in Tables 1-2 below (polymerization activity units in Tables 1-2: kg-polymer/mole-catalyst/hour).

**Table 1**

| | Phenol | Phenol: catalyst (molar ratio) | Polymer (gram) | Activity | Weightaverage molecular weight (10,000) | Molecular weight distribution | Glass transition temperature (°C) | Norbornene content (mol%) |
|---|---|---|---|---|---|---|---|---|
| D1 | None | 0 | 4.09 | 2454 | 4.6 | 2.3 | 164.6 | 54.8 |
| S1 | Phenol 1 | 75 | 3.51 | 2106 | 8.9 | 2.1 | 169.0 | 55.9 |
| S2 | Phenol 1 | 100 | 3.36 | 2016 | 11.4 | 2.0 | 170.1 | 56.2 |
| S3 | Phenol 1 | 125 | 3.22 | 1932 | 13.5 | 2.1 | 171.6 | 56.9 |
| S4 | Phenol 1 | 150 | 3.10 | 1860 | 16.7 | 2.2 | 171.8 | 57.1 |
| S5 | Phenol 2 | 100 | 2.66 | 1596 | 11.1 | 2.1 | 168.9 | 56.5 |
| S6 | Phenol 3 | 100 | 2.48 | 1488 | 6.7 | 2.0 | 166.6 | 56.6 |
| S7 | Phenol 4 | 100 | 2.88 | 1728 | 6.8 | 1.9 | 170.7 | 56.6 |
| S8 | Phenol 5 | 100 | 2.47 | 1482 | 5.9 | 1.9 | 169.1 | 56.2 |
| S9 | Phenol 6 | 100 | 2.58 | 1548 | 9.6 | 2.0 | 173.2 | 55.2 |

It is known from a comparison between Comparative Example 1 and Examples 1-9 that in the preparation method of the present disclosure, by using the catalyst composition comprising phenol in the present disclosure, the molecular weight of the prepared polymer is significantly higher than that of the polymer obtained without using phenol in the catalyst composition, it can broaden the regulatory scope of polyolefin product, improve the quality and expand the variety of the polyolefin product, and increase the content of cycloolefin in the copolymer, thereby raising the glass transition temperature of the polymer.

**Table 2**

| | Phenol | Phenol: catalyst (molar ratio) | Polymer (gram) | Activity | Weightaverage molecular weight (10,000) | Molecular weight distribution | Glass transition temperature (°C) | Norbornene content (mol%) |
|---|---|---|---|---|---|---|---|---|
| D2 | None | 0 | 3.08 | 1848 | 8.07 | 2.13 | 162.8 | 55.1 |
| S10 | Phenol 2 | 100 | 3.87 | 2322 | 9.68 | 2.11 | 169.2 | 56.8 |
| S11 | Phenol 3 | 100 | 3.79 | 2274 | 12.03 | 2.14 | 168.1 | 56.5 |
| S12 | Phenol 5 | 100 | 4.41 | 2646 | 8.45 | 2.12 | 175.0 | 56.9 |
| S13 | Phenol 6 | 100 | 3.27 | 1962 | 11.98 | 2.10 | 166.9 | 55.9 |

It is illustrated by the comparison of Comparative Example 2 and Examples 10-13 that in the preparation method of the present disclosure, using a combination of an organoboron compound and an organoaluminum compound with the phenol of the present disclosure, not only can increase the content of cycloolefin in the copolymerization compound, which in turn raise the glass transition temperature of the polymer, but also can improve catalytic activity of the catalysts.

As described above, when the catalyst composition of the present disclosure is used for the copolymerization of ethylene and cycloolefin, by performing the copolymerization reaction with the catalyst composition including a specific phenol, the molecular weight of the prepared polymer is significantly higher than that of the polymer obtained without using phenol in the catalyst composition, it is possible to broaden the regulatory scope of polyolefin product, enhance the quality and expand the type of the polyolefin product. In addition, when the catalyst composition of the present disclosure is used for the copolymerization of ethylene and cycloolefin, by performing the copolymerization reaction with the catalyst composition including a specific phenol, the content of cycloolefin in the copolymer is increased, thus the glass transition temperature of the polymer is raised.

Further, when the catalyst composition of the present disclosure is used for the copolymerization of ethylene and cycloolefin, the catalytic activity of the catalyst can also be enhanced by using a combination of an organoboron compound and an organoaluminum compound with the phenol of the present disclosure.

The following examples served to illustrate the use of the catalyst composition of the present disclosure for the copolymerization of ethylene and enol.

### Comparative Example 1

The polymerization flask was fully dried, then vacuumized and washed with nitrogen gas for three times repeatedly. The polymerization flask was vacuumized, and the solenoid valve was operated to fill ethylene at a pressure of 1atm, 23.7mL of toluene, 0.3mL of 4-penten-1-ol and 4mL of tri-isobutyl aluminum toluene solution (containing 4.0mmol of tri-isobutyl aluminum) were added, the temperature was raised to 70°C, 1mL of catalyst solution (containing 5µmol of diphenylmethylene (cyclopentadienyl) (fluorenyl) zirconium dichloride) was added, 1mL of tetra (pentafluorophenyl) borate triphenyl methyl ester toluene solution (containing 6mmol of tetra (pentafluorophenyl) borate triphenyl methyl ester) was further added, the timing was started, the pressure of ethylene in the polymerization flask was decreased due to the ethylene consumption during the reaction process, the solenoid valve automatically opened to replenish ethylene in order to maintain the pressure at 1atm. After 20 minutes, the feed of ethylene was shut off, the reaction solution was poured into a beaker, an acidified ethanol was added, then stirred for more than 6 hours, and the reaction product was filtered to prepare the polymer. The polymerization results and characterization data was shown in Table 3.

### Comparative Example 2

The polymerization flask was fully dried, then vacuumized and washed with nitrogen gas for three times repeatedly. The polymerization flask was vacuumized, the solenoid valve was operated to fill ethylene at a pressure of 1atm, 23.7mL of toluene, 0.3mL of 4-penten-1-ol, 3mL of tri-isobutyl aluminum toluene solution (containing 3.0mmol of tri-isobutyl aluminum) and 3mL of methylalumoxane toluene solution (containing 5.0mmol methylalumoxane) were subsequently added, the temperature was raised to 70°C, 1mL of catalyst solution (containing 5µmol of diphenylmethylene (cyclopentadienyl) (fluorenyl) zirconium dichloride) was added, the timing was started, the pressure of ethylene in the polymerization flask was decreased due to the ethylene consumption during the reaction process, the solenoid valve automatically opened to replenish ethylene in order to maintain the pressure at 1atm. After 20 minutes, the feed of ethylene was shut off, the reaction solution was poured into a beaker, an acidified ethanol was added, then stirred for more than 6 hours, and the reaction product was filtered to prepare the polymer. The polymerization results and characterization data was shown in Table 3.

### Examples 1-8

The polymerization flask was fully dried, then vacuumized and washed with nitrogen gas for three times repeatedly. The polymerization flask was vacuumized, and the solenoid valve was operated to fill ethylene at a pressure of 1atm, 22.7mL of toluene, 1mL of phenol solution, 0.3mL of 4-penten-1-ol and 4mL of tri-isobutyl aluminum toluene solution (containing 4.0mmol of tri-isobutyl aluminum) were added subsequently, the temperature was raised to 70°C, 1mL of catalyst solution (containing 5µmol of diphenylmethylene (cyclopentadienyl) (fluorenyl) zirconium dichloride) was added, 1mL of tetra (pentafluorophenyl) borate triphenyl methyl ester toluene solution (containing 6µmol of tetra (pentafluorophenyl) borate triphenyl methyl ester) was further added, the timing was started, the pressure of ethylene in the polymerization flask was decreased due to the ethylene consumption during the reaction process, the solenoid valve automatically opened to replenish ethylene in order to maintain the pressure at 1atm. After 20 minutes, the feed of ethylene was shut off, the reaction solution was poured into a beaker, an acidified ethanol was added, then stirred for more than 6 hours, the reaction product was filtered to prepare the polymer. The polymerization results and characterization data was shown in Table 4.

### Examples 9-14

The polymerization flask was fully dried, then vacuumized and washed with nitrogen gas for three times repeatedly. The polymerization flask was vacuumized, and the solenoid valve was operated to fill ethylene at a pressure of 1atm, 21.7mL of toluene, 1mL of phenol solution, 0.3mL of 4-penten-1-ol, 3mL of tri-isobutyl aluminum toluene solution (containing 3.0mmol of tri-isobutyl aluminum) and 3mL of methylalumoxane toluene solution (containing 5.0mmol methylalumoxane) were subsequently added, the temperature was raised to 70°C, 1mL of catalyst solution (containing 5µmol of diphenylmethylene (cyclopentadienyl) (fluorenyl) zirconium dichloride) was added, the timing was started, the pressure of ethylene in the polymerization flask was decreased due to the ethylene consumption during the reaction process, the solenoid valve automatically opened to replenish ethylene in order to maintain the pressure at 1atm. After 20 minutes, the feed of ethylene was shut off, the reaction solution was poured into a beaker, an acidified ethanol was added, then stirred for more than 6 hours, and the reaction product was filtered to prepare the polymer. The polymerization results and characterization data was shown in Table 4.

The polymerization and characterization data were illustrated in Tables 3-4 below (polymerization activity units in Tables 3-4: kg-polymer/mole-catalyst/hour).

**Table 3**

| | Phenol | Phenol: catalyst (molar ratio) | Polymer (gram) | Activity | Weight-average molecular weight (10,000) | Molecular weight distribution | Content of 4-penten-1-ol (mol%) |
|---|---|---|---|---|---|---|---|
| D1 | None | 0 | 0.63 | 378 | 0.97 | 2.20 | 5.9 |
| S1 | Phenol 1 | 50 | 0.61 | 366 | 1.05 | 2.23 | 6.0 |
| S2 | Phenol 1 | 75 | 0.60 | 360 | 1.31 | 2.41 | 6.0 |
| S3 | Phenol 1 | 100 | 0.58 | 348 | 1.56 | 2.64 | 6.1 |
| S4 | Phenol 1 | 125 | 0.56 | 336 | 1.85 | 2.71 | 6.2 |
| S5 | Phenol 1 | 150 | 0.52 | 312 | 2.01 | 2.68 | 6.3 |
| S6 | Phenol 2 | 100 | 0.48 | 288 | 3.07 | 3.62 | 7.3 |
| S7 | Phenol 3 | 100 | 0.55 | 330 | 1.40 | 2.85 | 8.2 |
| S8 | Phenol 5 | 100 | 0.56 | 336 | 1.07 | 2.11 | 6.5 |

As can be seen from a comparison of Comparative Example 1 with Examples 1-8 that in the preparation method of the present disclosure, both the molecular weight and the content of enol structural unit in copolymerization can be increased by using the catalyst composition including a phenol of the present disclosure.

**Table 4**

| | Phenol | Phenol: catalyst (molar ratio) | Polymer (gram) | Activity | Weight-average molecular weight (10,000) | Molecular weight distribution | Content of 4-penten-1-ol (mol%) |
|---|---|---|---|---|---|---|---|
| D2 | None | 0 | 0.70 | 420 | 0.67 | 2.36 | 4.2 |
| S9 | Phenol 1 | 100 | 1.08 | 648 | 0.87 | 2.39 | 4.6 |
| S10 | Phenol 2 | 100 | 1.24 | 744 | 0.84 | 2.33 | 5.4 |
| S11 | Phenol 3 | 100 | 0.88 | 528 | 1.68 | 2.51 | 5.3 |
| S12 | Phenol 4 | 100 | 0.87 | 522 | 1.37 | 2.38 | 5.8 |
| S13 | Phenol 5 | 100 | 0.85 | 510 | 1.67 | 2.64 | 5.8 |
| S14 | Phenol 6 | 100 | 1.21 | 726 | 0.74 | 2.61 | 6.3 |

It can also be derived from the comparison of Comparative Example 2 and Examples 9-14 that in the preparation method of the present disclosure, by using a combination of an alkyl aluminoxane and an organoaluminum compound as well as the phenol of the present disclosure, not only the content of enol in the copolymerization compound can be raised, the polymer molecular weight can be increased, but also the catalytic activity of the catalyst can be enhanced.

As described above, when the catalyst composition of the present disclosure is used for the copolymerization of ethylene and enol, by performing a copolymerization reaction using the catalyst composition including a specific phenol, the molecular weight of the resulting polymer is significantly higher than that of the polymer prepared with the catalyst composition lacking the phenol, it is possible to broaden the regulatory scope of polyolefin product, improve quality and expand the variety of the polyolefin product. In addition, when the catalyst composition of the present disclosure is used for the copolymerization of ethylene and enol, the content of enol in the copolymer is enhanced by performing a copolymerization reaction using the catalyst composition including a specific phenol.

Further, when the catalyst composition of the present disclosure is used for copolymerization of ethylene and enol, the catalytic activity of the catalyst can be also enhanced by using a combination of alkyl aluminoxane and organoaluminum compound with the phenol of the invention.

## Claims

1. A catalyst composition comprising the following components:
a) a metallocene compound with a structure represented by formula (I) and/or formula (II), 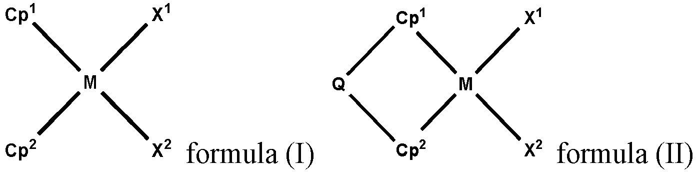
in formulae (I) and (II),
Cp¹ and Cp² are each independently C₁-C₂₀ hydrocarbyl mono-substituted or poly-substituted cyclopentadienyl or unsubstituted cyclopentadienyl, C₁-C₂₀ hydrocarbyl mono-substituted or poly-substituted indenyl or unsubstituted indenyl, C₁-C₂₀ hydrocarbyl mono-substituted or poly-substituted fluorenyl or unsubstituted fluorenyl;
M is titanium, zirconium or hafnium;
X¹ and X² are independently halogen atoms, alkoxy, aryloxy, or hydrocarbyl, respectively;
Q in formula (II) is an atom or a group that connects Cp¹ and Cp²,
b) a co-catalyst component,
c) a phenol with a structure represented by formula (III), 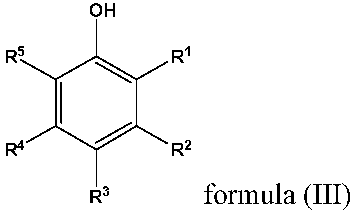 each of R¹, R², R³, R⁴ and R⁵ in formula (III) is independently a hydrogen atom, a halogen atom, or a hydrocarbyl having 1-30 carbon atoms; when each of R¹, R², R³, R⁴ and R⁵ is independently a hydrocarbyl having 1-30 carbon atoms, any two groups thereof may be closed into a ring.

2. The catalyst composition of claim 1, wherein the co-catalyst component is a combination of an organoaluminum compound and an alkyl aluminoxane or a combination of an organoaluminum compound and an organoboron compound, the organoaluminum compound is an alkyl aluminum represented by general formula AlR₁R₂R₃, wherein R₁, R₂ and R₃ are each independently alkyl having 2-8 carbon atoms, R₁, R₂ and R₃ are the same or different.

3. The catalyst composition of claim 1, wherein Cp¹ and Cp² in formulae (I) and (II) are each independently C₁-C₁₆ hydrocarbyl mono-substituted or poly-substituted cyclopentadienyl or unsubstituted cyclopentadienyl, C₁-C₁₆ hydrocarbyl mono-substituted or poly-substituted indenyl or unsubstituted indenyl, C₁-C₁₆ hydrocarbyl mono-substituted or poly-substituted fluorenyl or unsubstituted fluorenyl;
M is titanium or zirconium;
X¹ and X² are independently halogen atoms;
preferably, Q in formula (II) is -CH₂CH₂-, both Cp¹ and Cp² are indenyl,
M is zirconium, X¹ and X² are chlorine atoms;
preferably, Q in formula (II) is -SiR⁶R⁷-, both Cp¹ and Cp² are indenyl, M is zirconium, X¹ and X² are chlorine atoms, R⁶ and R⁷ are each independently a hydrogen atom or a C₁-C₂₀ hydrocarbyl;
preferably, Q in formula (II) is -SiR⁸R⁹-, Cp¹ and Cp² are both 2-methyl-4-phenyl-indenyl, M is zirconium, X¹ and X² are chlorine atoms, R⁸ and R⁹ are each independently a hydrogen atom or a C₁-C₂₀ hydrocarbyl;
preferably, Q in formula (II) is -CR¹⁰R¹¹-, Cp¹ is cyclopentadienyl, Cp² is fluorenyl, M is zirconium, X¹ and X² are chlorine atoms, R¹⁰ and R¹¹ are methyl or phenyl;
preferably, Q in formula (II) is -CR¹²R¹³-, Cp¹ is cyclopentadienyl, Cp² is 2,7-di-t-butyl-fluorenyl, M is zirconium, X¹ and X² are chlorine atoms, R¹² and R¹³ are methyl or phenyl.

4. The catalyst composition of claim 1, wherein the metallocene compound is one or more selected from the group consisting of biscyclopentadienyl zirconium dichloride, bis(n-butylcyclopentadienyl) zirconium dichloride, bis(1-methyl-3-n-butylcyclopentadienyl) zirconium dichloride, bisindenyl zirconium dichloride, diphenylmethylene (cyclopentadienyl) (fluorenyl) zirconium dichloride, diphenylmethylene (cyclopentadienyl) (2,7-di-tert-butyl-9-fluorenyl) zirconium dichloride, isopropyl (cyclopentadienyl) (fluorenyl) zirconium dichloride, (4,4'-tert-butyl-diphenylmethylene)-cyclopentadienyl-(1-indenyl) -titanium dichloride, (4,4'-tert-butyl-diphenylmethylene)-cyclopentadienyl-(1-indenyl) - zirconium dichloride, (4,4'-tert-butyl-diphenylmethylene)-cyclopentadienyl-(1-indenyl) -hafnium dichloride, (4,4'-methoxy-diphenylmethylene)-cyclopentadienyl-(1-indenyl) zirconium dichloride, (4,4'-methoxy-diphenylmethylene)-cyclopentadienyl-(1-indenyl)-hafnium dichloride, (4,4'-methyl-diphenylmethylene) -cyclopentadienyl-(1-indenyl) zirconium dichloride, (4-methyl-4'-tert-butyl-diphenylmethylene)-cyclopentadienyl-(1-indenyl) zirconium dichloride, (3,3'-trifluoromethyl-diphenylmethylene)-cyclopentadienyl-(1-indenyl) -titanium dichloride, (3,3'-trifluoromethyl-diphenylmethylene)-cyclopentadienyl-(1-indenyl) zirconium dichloride, (3,3'-trifluoromethyl-diphenylmethylene)-cyclopentadienyl-(1-indenyl) -hafnium dichloride, (4,4'-fluoro-diphenylmethylene)-cyclopentadienyl-(1-indenyl)-titanium dichloride, (4,4'-fluoro-diphenylmethylene)-cyclopentadienyl-(1-indenyl) zirconium dichloride, (4,4'-fluoro-diphenylmethylene)-cyclopentadienyl-(1-indenyl)-hafnium dichloride, (4,4'-chloro-diphenylmethylene)-cyclopentadienyl-(1-indenyl) -titanium dichloride, (4,4'-chloro-diphenylmethylene)-cyclopentadienyl-(1-indenyl) zirconium dichloride, or (4,4'-chloro-diphenylmethylene)-cyclopentadienyl-(1-indenyl)-hafnium dichloride, rac-1,2-ethylenebis(indenyl)zirconium dichloride, rac-dimethylsilyl bisindenyl zirconium dichloride, rac-dimethylsilyl-bis(2-methyl-indenyl) zirconium dichloride and rac-dimethylsilyl-bis(2-methyl-4-phenylindenyl) zirconium dichloride; preferably, the metallocene compound is one or more selected from the group consisting of biscyclopentadienyl zirconium dichloride, bis(n-butylcyclopentadienyl) zirconium dichloride, bis(1-methyl-3-n-butylcyclopentadienyl) zirconium dichloride, bisindenyl zirconium dichloride, diphenylmethylene (cyclopentadienyl) (fluorenyl) zirconium dichloride, diphenylmethylene (cyclopentadienyl) (2,7-di-tert-butyl-9-fluorenyl) zirconium dichloride, isopropyl (cyclopentadienyl) (fluorenyl) zirconium dichloride, rac-1,2-ethylenebis(indenyl)zirconium dichloride, rac-dimethylsilyl bisindenyl zirconium dichloride and rac-dimethylsilyl-bis(2-methyl-4-phenylindenyl) zirconium dichloride.

5. The catalyst composition of claim 1, wherein the alkyl aluminoxane is a compound with a structure shown in formula (IV) and/or formula (V): 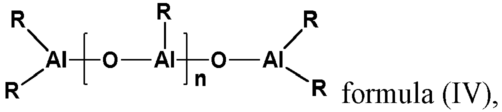 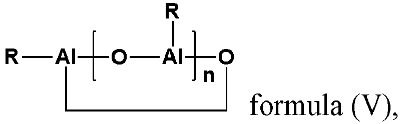
in formula (IV) and formula (V), R is selected from C₁-C₁₅ alkyl, and n represents an integer of 4-30;
preferably, R is selected from C₁-C₅ alkyl, and n represents an integer of 10-30;
preferably, the alkyl aluminoxane is methyl aluminoxane.

6. The catalyst composition of claim 1, wherein the organoboron compound is one or more selected from the group consisting of tetra (pentafluorophenyl) borate triphenyl methyl ester, N,N-dimethylaniline tetra (pentafluorobenzene) borate and tri (pentafluorobenzene) boron.

7. The catalyst composition of claim 1, wherein the organoaluminum compound is one or more selected from the group consisting of tri-ethyl aluminum, tri-isopropyl aluminum, tripropyl aluminum, tributyl aluminum, tri-isobutyl aluminum, tri-sec-butyl aluminum, tricyclic pentyl aluminum, tri-n-pentyl aluminum, triisopentyl aluminum, trihexyl aluminum, tri-octyl aluminum, ethyldimethyl aluminum and methyldiethyl aluminum;
preferably, the organoaluminum compound is one or more selected from the group consisting of tri-isobutyl aluminum, tri-n-hexyl aluminum and tri-n-octyl aluminum;
more preferably, the organoaluminum compound is tri-isobutyl aluminum.

8. The catalyst composition of any one of claims 1-7, wherein R¹, R², R³, R⁴ and R⁵ in formula (III) are each independently a hydrogen atom, a halogen atom or an alkyl having 1-6 carbon atoms, an aralkyl having 7-10 carbon atoms;
preferably, R¹, R², R³, R⁴ and R⁵ in formula (III) are independently a hydrogen atom, a halogen atom or an alkyl having 1-4 carbon atoms, an aralkyl having 7-8 carbon atoms;
more preferably, R¹, R², R³, R⁴ and R⁵ in formula (III) are independently a hydrogen atom, a halogen atom or an alkyl having 1-4 carbon atoms, an aralkyl having 7-8 carbon atoms, and at least one of R¹, R², R³, R⁴ and R⁵ is not a hydrogen atom or a halogen atom;
preferably, the phenol is one or more selected from the group consisting of 2,6-di-tert-butyl-4-methylphenol, 2,6-di-tert-butyl-phenol, 2,4,6-tri-tert-butyl-phenol, 2,4-di-tert-butyl-phenol, 4-chloro-2-benzyl-phenol, 4-chloro-2-isopropyl-5-methylphenol and 2,4-dichloro-1-naphthol.

9. The catalyst composition of any one of claims 1-7, wherein the co-catalyst is a combination of an organoaluminum compound and an alkyl aluminoxane, the molar ratio of the metallocene compound to the alkyl aluminoxane calculated in terms of aluminum is 1: (50-20,000), preferably 1: (200-10,000), more preferably 1: (500-3,000); the molar ratio of the metallocene compound to the organoaluminum compound is 1: (10-5,000), more preferably 1: (10-3,000), more preferably 1: (10-2,000), more preferably 1: (10-1,000), further preferably 1: (100-800), further preferably 1: (200-600), further preferably 1: (300-600).

10. The catalyst composition of any one of claims 1-7, wherein the co-catalyst is a combination of an organoboron compound and an organoaluminum compound; the molar ratio of the metallocene compound to the organoboron compound is 1: (1-5), preferably 1: (1-2); the molar ratio of the metallocene compound to the organoaluminum compound is 1: (10-1,000), preferably 1: (10-200).

11. The catalyst composition of any one of claims 1-7, wherein the molar ratio of the metallocene compound to the phenol is 1: (1-1,000), preferably 1: (10-500).

12. A catalyst composition of any one of claims 1-7, wherein the catalyst composition does not contain a carrier.

13. A method of preparing an ethylene-cycloolefin copolymer comprising: subjecting ethylene and cycloolefin to a copolymerization reaction using a catalyst composition, the catalyst composition comprises the following components:
a) a metallocene compound with a structure represented by formula (I) and/or formula (II), 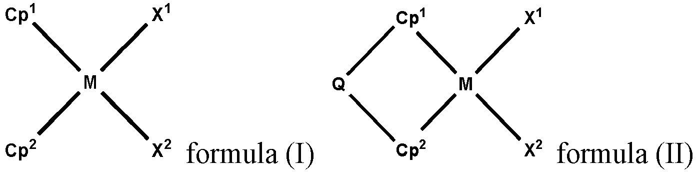
in formulae (I) and (II),
Cp¹ and Cp² are each independently C₁-C₂₀ hydrocarbyl mono-substituted or poly-substituted cyclopentadienyl or unsubstituted cyclopentadienyl, C₁-C₂₀ hydrocarbyl mono-substituted or poly-substituted indenyl or unsubstituted indenyl, C₁-C₂₀ hydrocarbyl mono-substituted or poly-substituted fluorenyl or unsubstituted fluorenyl;
M is titanium, zirconium, or hafnium;
X¹ and X² are independently halogen atoms, alkoxy, aryloxy, or hydrocarbyl, respectively,
Q in formula (II) is an atom or a group that connects Cp¹ and Cp²,
b) a co-catalyst component,
c) a phenol with a structure represented by formula (III), 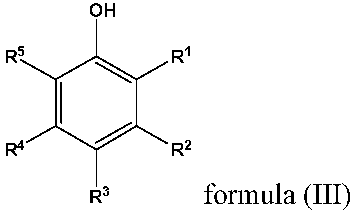 each of R¹, R², R³, R⁴ and R⁵ in formula (III) is independently a hydrogen atom, a halogen atom, or a hydrocarbyl having 1-30 carbon atoms, and when each of R¹, R², R³, R⁴ and R⁵ is independently a hydrocarbyl having 1-30 carbon atoms, any two groups thereof may be closed into a ring.

14. A method of preparing an ethylene-enol copolymer comprising: subjecting ethylene and enol to a copolymerization reaction using a catalyst composition, the catalyst composition comprises the following components:
a) a metallocene compound with a structure represented by formula (I) and/or formula (II), 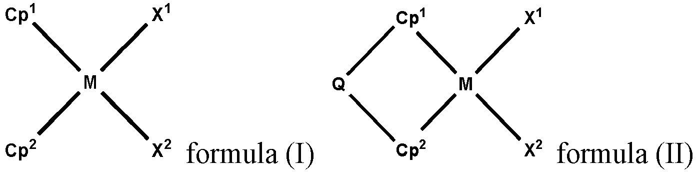
In formulae (I) and (II),
Cp¹ and Cp² are each independently C₁-C₂₀ hydrocarbyl mono-substituted or poly-substituted cyclopentadienyl or unsubstituted cyclopentadienyl, C₁-C₂₀ hydrocarbyl mono-substituted or poly-substituted indenyl or unsubstituted indenyl, C₁-C₂₀ hydrocarbyl mono-substituted or poly-substituted fluorenyl or unsubstituted fluorenyl;
M is titanium, zirconium, or hafnium;
X¹ and X² are independently halogen atoms, alkoxy, aryloxy, or hydrocarbyl, respectively;
Q in formula (II) is an atom or a group that connects Cp¹ and Cp²,
b) a co-catalyst component,
c) a phenol with a structure represented by formula (III), 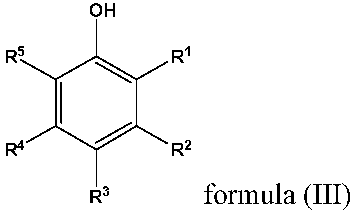 each of R¹, R², R³, R⁴ and R⁵ in formula (III) is independently a hydrogen atom, a halogen atom, or a hydrocarbyl having 1-30 carbon atoms, and when each of R¹, R², R³, R⁴ and R⁵ is independently a hydrocarbyl having 1-30 carbon atoms, any two groups thereof may be closed into a ring.

15. The method of claim 13 or 14, wherein the co-catalyst component is a combination of an organoaluminum compound and an organoboron compound;
preferably, the molar ratio of the metallocene compound to the organoboron compound is 1: (1-5), more preferably 1: (1-2); the molar ratio of the metallocene compound to the organoaluminum compound is 1: (10-1,000), more preferably 1: (10-200).

16. The method of claim 13 or 14, wherein the co-catalyst is a combination of an organoaluminum compound and an alkyl aluminoxane; preferably, the molar ratio of the metallocene compound to the alkyl aluminoxane calculated in terms of aluminum is 1: (50-20,000), preferably 1: (200-10,000), more preferably 1: (500-3,000); the molar ratio of the metallocene compound to the organoaluminum compound is 1: (10-5,000), more preferably 1: (10-3,000), more preferably 1: (10-2,000), more preferably 1: (10-1,000), further preferably 1: (100-800), further preferably 1: (200-600), further preferably 1: (300-600).

17. The method of claim 13 or 14, wherein the co-catalyst is an alkyl aluminoxane, the molar ratio of the metallocene compound to the alkyl aluminoxane calculated in terms of aluminum is 1: (50-20,000), preferably 1: (200-10,000), more preferably 1: (500-3,000).

18. The method of any one of claims 13-17, wherein Cp¹ and Cp² in formulae (I) and (II) are each independently C₁-C₁₆ hydrocarbyl mono-substituted or poly-substituted cyclopentadienyl or unsubstituted cyclopentadienyl, C₁-C₁₆ hydrocarbyl mono-substituted or poly-substituted indenyl or unsubstituted indenyl, C₁-C₁₆ hydrocarbyl mono-substituted or poly-substituted fluorenyl or unsubstituted fluorenyl;
M is titanium or zirconium;
X¹ and X² are independently halogen atoms.

19. The method of any one of claims 13-17, wherein the metallocene compound is one or more selected from the group consisting of biscyclopentadienyl zirconium dichloride, bis(n-butylcyclopentadienyl) zirconium dichloride, bis(1-methyl-3-n-butylcyclopentadienyl) zirconium dichloride, bisindenyl zirconium dichloride, diphenylmethylene (cyclopentadienyl) (fluorenyl) zirconium dichloride, diphenylmethylene (cyclopentadienyl) (2,7-di-tert-butyl-9-fluorenyl) zirconium dichloride, isopropyl (cyclopentadienyl) (fluorenyl) zirconium dichloride, (4,4'-tert-butyl-diphenylmethylene)-cyclopentadienyl-(1-indenyl) -titanium dichloride, (4,4'-tert-butyl-diphenylmethylene)-cyclopentadienyl-(1-indenyl) - zirconium dichloride, (4,4'-tert-butyl-diphenylmethylene)-cyclopentadienyl-(1-indenyl) -hafnium dichloride, (4,4'-methoxy-diphenylmethylene)-cyclopentadienyl-(1-indenyl) zirconium dichloride, (4,4'-methoxy-diphenylmethylene)-cyclopentadienyl-(1-indenyl)-hafnium dichloride, (4,4'-methyl-diphenylmethylene) -cyclopentadienyl-(1-indenyl) zirconium dichloride, (4-methyl-4'-tert-butyl-diphenylmethylene)-cyclopentadienyl-(1-indenyl) zirconium dichloride, (3,3'-trifluoromethyl-diphenylmethylene)-cyclopentadienyl-(1-indenyl) -titanium dichloride, (3,3'-trifluoromethyl-diphenylmethylene)-cyclopentadienyl-(1-indenyl) zirconium dichloride, (3,3'-trifluoromethyl-diphenylmethylene)-cyclopentadienyl-(1-indenyl) -hafnium dichloride, (4,4'-fluoro-diphenylmethylene)-cyclopentadienyl-(1-indenyl)-titanium dichloride, (4,4'-fluoro-diphenylmethylene)-cyclopentadienyl-(1-indenyl) zirconium dichloride, (4,4'-fluoro-diphenylmethylene)-cyclopentadienyl-(1-indenyl)-hafnium dichloride, (4,4'-chloro-diphenylmethylene)-cyclopentadienyl-(1-indenyl) -titanium dichloride, (4,4'-chloro-diphenylmethylene)-cyclopentadienyl-(1-indenyl) zirconium dichloride, or (4,4'-chloro-diphenylmethylene)-cyclopentadienyl-(1-indenyl)-hafnium dichloride, rac-1,2-ethylenebis(indenyl)zirconium dichloride, rac-dimethylsilyl bisindenyl zirconium dichloride, rac-dimethylsilyl-bis(2-methyl-indenyl) zirconium dichloride and rac-dimethylsilyl-bis(2-methyl-4-phenylindenyl) zirconium dichloride; preferably, the metallocene compound is one or more selected from the group consisting of biscyclopentadienyl zirconium dichloride, bis(n-butylcyclopentadienyl) zirconium dichloride, bis(1-methyl-3-n-butylcyclopentadienyl) zirconium dichloride, bisindenyl zirconium dichloride, diphenylmethylene (cyclopentadienyl) (fluorenyl) zirconium dichloride, diphenylmethylene (cyclopentadienyl) (2,7-di-tert-butyl-9-fluorenyl) zirconium dichloride, isopropyl (cyclopentadienyl) (fluorenyl) zirconium dichloride, rac-1,2-ethylenebis(indenyl)zirconium dichloride, rac-dimethylsilyl bisindenyl zirconium dichloride and rac-dimethylsilyl-bis(2-methyl-4-phenylindenyl) zirconium dichloride.

20. The method of any one of claims 13-17, wherein Q in formula (II) is-CH₂CH₂-, both Cp¹ and Cp² are indenyl, M is zirconium, X¹ and X² are chlorine atoms;
preferably, Q in formula (II) is -SiR⁶R⁷-, both Cp¹ and Cp² are indenyl, M is zirconium, X¹ and X² are chlorine atoms, R⁶ and R⁷ are each independently a hydrogen atom or a C₁-C₂₀ hydrocarbyl;
preferably, Q in formula (II) is -SiR⁸R⁹-, Cp¹ and Cp² are both 2-methyl-4-phenyl-indenyl, M is zirconium, X¹ and X² are chlorine atoms, R⁸ and R⁹ are each independently hydrogen atom or a C₁-C₂₀ hydrocarbyl;
preferably, Q in formula (II) is -CR¹⁰R¹¹-, Cp¹ is cyclopentadienyl, Cp² is fluorenyl, M is zirconium, X¹ and X² are chlorine atoms, R¹⁰ and R¹¹ are methyl or phenyls;
preferably, Q in formula (II) is -CR¹²R¹³-, Cp¹ is cyclopentadienyl, Cp² is 2,7-di-t-butyl-fluorenyl, M is zirconium, X¹ and X² are chlorine atoms, R¹² and R¹³ are methyl or phenyl.

21. The method of claim 15, wherein the organoboron compound is one or more selected from the group consisting of tetra (pentafluorophenyl) borate triphenyl methyl ester, N,N-dimethylaniline tetra (pentafluorobenzene) borate and tri (pentafluorobenzene) boron.

22. The method of claim 16, wherein the organoaluminum compound is one or more selected from the group consisting of tri-ethyl aluminum, tri-isopropyl aluminum, tripropyl aluminum, tributyl aluminum, tri-isobutyl aluminum, tri-sec-butyl aluminum, tricyclic aluminum, tri-n-pentyl aluminum, triisopentyl aluminum, trihexyl aluminum, tri-octyl aluminum, ethyldimethyl aluminum and methyldiethyl aluminum;
preferably, the organoaluminum compound is one or more selected from the group consisting of tri-isobutyl aluminum, tri-n-hexyl aluminum and tri-n-octyl aluminum;
more preferably, the organoaluminum compound is tri-isobutyl aluminum.

23. The method of claim 16 or 17, wherein the alkyl aluminoxane is a compound with a structure shown in formula (IV) and/or formula (V): 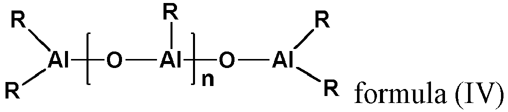 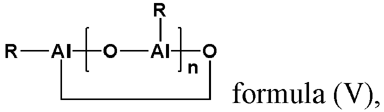
in formula (IV) and formula (V), R is selected from C₁-C₁₅ alkyl, and n represents an integer of 4-30;
preferably, R is selected from C₁-C₅ alkyl, and n represents an integer of 10-30;
preferably, the alkyl aluminoxane is methyl aluminoxane.

24. The method of any one of claims 13-17, wherein R¹, R², R³, R⁴ and R⁵ in formula (III) are each independently a hydrogen atom, a halogen atom or an alkyl having 1-6 carbon atoms, an aralkyl having 7-10 carbon atoms;
preferably, R¹, R², R³, R⁴ and R⁵ in formula (III) are independently a hydrogen atom, a halogen atom or an alkyl having 1-4 carbon atoms, an aralkyl having 7-8 carbon atoms;
preferably, the phenol is one or more selected from the group consisting of 2,6-di-tert-butyl-4-methylphenol, 2,6-di-tert-butyl-phenol, 2,4-di-tert-butyl-phenol, 4-chloro-2-benzyl-phenol, 4-chloro-2-isopropyl-5-methylphenol and 2,4-dichloro-1-naphthol.

25. The method of any one of claims 13-17, wherein the molar ratio of the metallocene compound to the phenol is 1: (1-1,000), preferably 1: (10-500).

26. The method of any one of claims 13 and 15-17, wherein the concentration of cycloolefin in the polymerization reaction system is within a range of 0.05-10mol/L, preferably 0.1-5mol/L during the copolymerization reaction of ethylene and cycloolefin.

27. The method of any one of claims 13 and 15-17, wherein the cycloolefin in a copolymerization reaction of ethylene and the cycloolefin is a cycloolefin having 5-20 carbon atoms;
preferably, the cycloolefin is one or more selected from the group consisting of cyclopentene, cycloheptene, cyclooctene, norbornene and tetracyclic [6.2.1.13,6.02,7] dodeca-4-alkene;
preferably, the cycloolefin is norbornene.

28. The method of any one of claims 14-17, wherein the concentration of enol in the polymerization reaction system is within a range of 0.01-1 mol/L, preferably 0.1-1mol/L during the copolymerization reaction of ethylene and enol;
preferably, the molar ratio of the organoaluminum compound to enol is 1: (1-3), preferably 1: (1-1.5).

29. The method of any one of claims 14-17, wherein the enol in the copolymerization reaction of ethylene and enol has a structure shown in formula (VI), 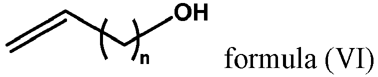 n in formula (VI) is an integer of 1-15, preferably an integer of 2-9.

30. The method of any one of claims 13-17, wherein the concentration of metallocene compound in the polymerization system is within a range of 1×10⁻⁹mol/L - 1×10⁻³mol/L, preferably within a range of 1×10⁻⁸mol/L - 1×10⁻⁴mol/L.

31. The method of any one of claims 13-17, wherein the polymerization reaction temperature is within a range of 0-200°C, and the polymerization reaction time is within a range of 1-300min;
preferably, the polymerization reaction temperature is within a range of 50-160°C, and the polymerization reaction time is within a range of 5-60 min.
